# EUROPEAN PATENT APPLICATION

(11) **EP 2 181 625 A2**
(43) Date of publication of application: **05.05.2010**
(21) Application number: 10153861.9
(22) Date of filing: 11.10.2005
(51) Int. Cl.: A47C 27/08

(54) **Cover for an inflatable device**

(30) Priority: 08.10.2004 US 617138 P
(62) Divisional of application: 05806606.9
(71) Applicant: Chaffee, Robert B., Portland MA 04102 (US)
(72) Inventor: Chaffee, Robert B., Portland MA 04102 (US)
(74) Representative: Grey, Ian Michael

(57) **Abstract**

A cover arrangement sized and shaped for use with an inflatable device. The cover arrangement has a first region comprising a material having a first resistance to air flow and a second region having a second resistance to air flow.

## Description

### BACKGROUND OF INVENTION

### 1. Field of Invention

The application is directed to methods and apparatus to facilitate inflation and/or deflation of inflatable devices.

### 2. Discussion of Related Art

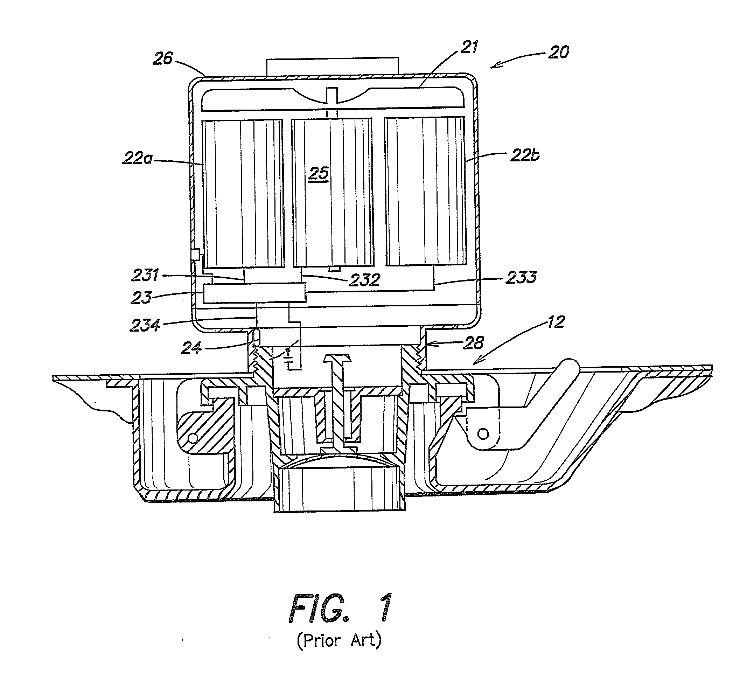

U.S. Patent Number 5,367,726, (hereinafter the '726 patent) owned by applicant discloses an inflatable support system that includes an inflatable mattress including a dual valve assembly 12 as illustrated in Fig. 1. The '726 patent is incorporated by reference herein. The dual valve assembly can be engaged with a portable battery powered inflation device 20 also illustrated in Fig. 1. Inflation device 20 includes a DC motor 25, which is powered by rechargeable batteries 22a and 22b, an impeller 21 for moving air that is driven by the DC motor 25, all mounted in a housing 26 that includes a mouth region 28. Mouth region 28 is removably engagable with the inflation input of the dual valve assembly. The '726 patent discloses that the method of engagement can be by, for example, screw threads or any other suitable technique known in the art, such as a bayonet mount permitting quick connection and disconnection of the portable inflation device 20 with the dual valve assembly.

The portable inflation device also comprises control circuitry 23 that controls the DC motor 25, and a sensing device 24 for sensing when the mouth of portable inflation device is engaged with the inflation input of the dual valve assembly. The sensing device is located internally to the mouth region of the portable inflation device such that it is inaccessible to a user. The control circuitry is connected to the batteries over lines 231 and 233, to the DC motor 25 over line to 232, and to the sensing device over line 234. The '726 patent discloses that the sensing device may be, for example, a simple contact switch, mounted in the mouth 28 of the portable inflation device, that is contacted by the inflation input of the dual valve assembly when it is engaged with the mouth of the portable inflation device. The control circuitry is configured to deliver power to the motor 25 from the batteries when the sensing device is contacted, or in other words when the sensing device has detected engagement of the portable inflation device with the input of the dual valve assembly. Thus, pumping of air into an inflatable device, such as an air mattress, begins after, and as soon as, the portable inflation device has been properly engaged with the dual valve assembly.

The '726 patent also discloses that the portable inflation device ceases delivering power when the portable inflation device is no longer engaged with inflation input of the dual valve assembly, so that engaging and disengaging of the portable inflation device with the dual valve assembly provides power to the portable inflation device and disconnects power to the portable inflation device, respectively.

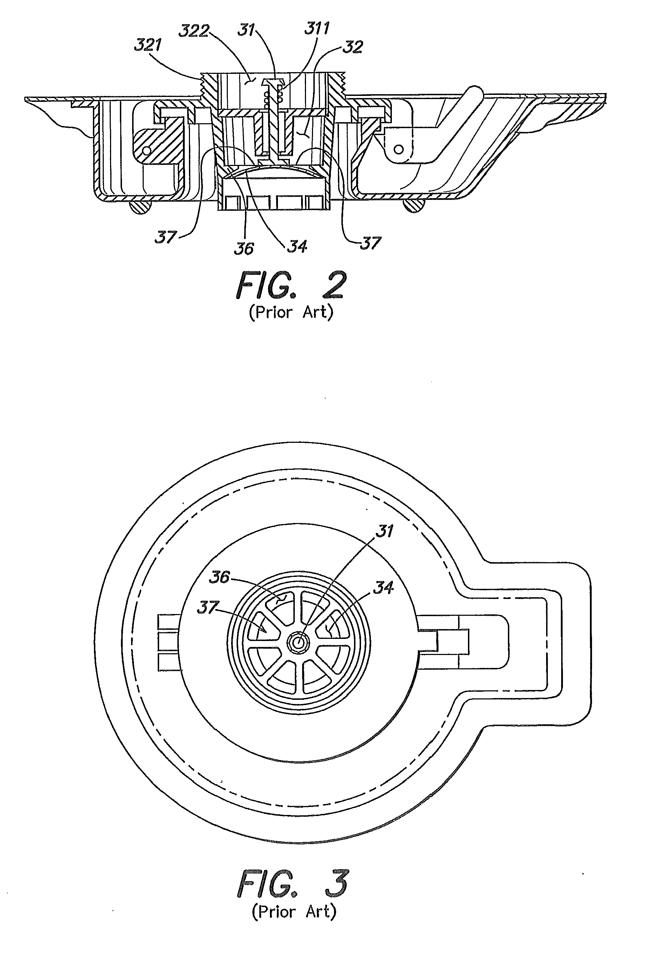

Figs. 2 and 3 show a cross sectional view and a top view, respectively, of the dual valve assembly disclosed in FIG. 1, which will now be discussed in greater detail. Features of the dual valve assembly notable for interacting with the portable inflation device include the inflation input 322 having structure to engage with the importable inflation device, such as, exterior threads 321 or a bayonet mount (not illustrated). It is to be appreciated that air pressure at the inflation input provided by the portable inflation device after engaging the portable inflation device with the dual valve assembly, causes a downward displacement of the diaphragm 34 away from its valve seat 36, thereby permitting airflow through a first cylinder 32 via a passageway 37. As disclosed in the '726 patent, once air pressure is removed from the inflation input 322, for example, due to disengagement of the portable inflation device with the dual valve assembly, the pressure of the inflatable device urges the diaphragm 34 against the valve seat 36 to provide a seal against air exiting from the inflatable device in which the dual valve assembly is integrated. This embodiment of the dual valve assembly also includes an optional spring 311 that can be used to override the self seal of the dual valve assembly by pressing down on the stem 31, for example, to adjust an amount of pressure within the inflatable device in which the dual valve assembly is integrated.

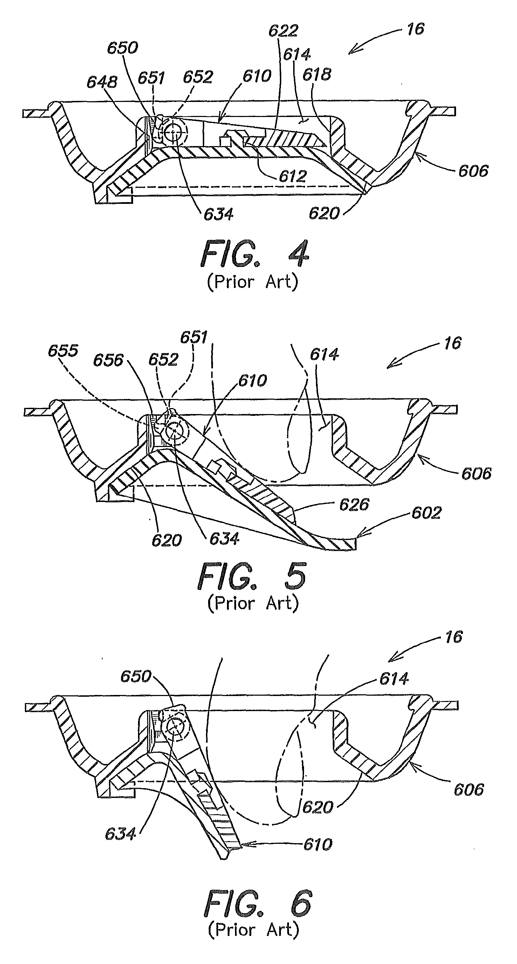

FIG. 4 is a cross sectional view of another embodiment of a self-sealing valve assembly that can be used with the portable inflation device described above. This embodiment and other embodiments of a self-sealing valve assembly are described in more detail in U.S. Patent No. 6,237,621 owned by applicant, which is incorporated herein by reference.

This valve assembly includes structure that corresponds to the dual-valve assembly described above, which provides for using the self-sealing valve in a similar manner. For example, the self-sealing valve includes a single port, that provides for inflation, deflation and comfort control of the inflatable device in which the self-sealing valve is integrated. The self-sealing valve 16 self-opens upon inflation of the device by a portable inflation device, for example, by engaging the self-sealing valve with the portable inflation device, and self-seals upon cessation of inflation. This self-sealing valve is also configured so that inflation through the valve can be effected for example, by blowing into the valve. The self-sealing valve 16 further allows fine tuning of pressure adjustment, as described below. In one embodiment, the single fluid port may have an unobstructed fluid path that is greater than approximately 0.25 inches in diameter. However, it is to be appreciated that the single fluid port may have other diameters to accommodate different inflatable devices sizes and fluid flow parameters.

Referring to FIGS. 5-6, there is illustrated various views of the exemplary embodiment of the self-sealing valve 16 of FIG. 4. Some of the structure that allows for the self-sealing valve to operate as herein described includes a diaphragm 602 positioned within a valve housing 606 by a movable hanger arm 610 which suspends the diaphragm from a mounting point 612 in the center of an air inlet 614. The hanger arm 610 is a rotating diaphragm hanger that is removably contained within the air inlet 614 of the valve housing 606, with one end secured adjacent to an inner wall 618 of the air inlet 614. A point of attachment of the one end of the hanger arm 610 to the inner wall 618 is configured to allow the hanger arm 610 to pivot downward into the valve housing 606, a motion which unseats the diaphragm 602 from a valve seat 620, in a closed position, and opens an airpath, to an open position, into the bladder of the surface comfort layer device to allow for both inflation and deflation of the surface comfort layer device.

According to one embodiment of the self-sealing valve, the hanger arm 610 flares outward towards the inner wall 618 of the air inlet 614 creating a "paddle" surface 622 which occupies some of the air inlet 614. The paddle surface 622 of the hanger arm 610 provides stability to the flexible diaphragm 602 as it rotates with the hanger arm 610 from the closed position to the open position. The paddle surface 622 of the hanger arm 610 also facilitates manipulation of the hanger arm 610 by, for example, a fingertip of a user to, for example, control a firmness of the inflatable device in which the self-sealing valve is integrated. The paddle surface 622 projects outward to a point 626, extending the length of the hanger arm 610. This projection bears upon the flexible diaphragm 602, thereby preventing it from flexing upward when the hanger arm 610 is pressed downward for firmness control or deflation.

The hanger arm 610 may be secured within the air inlet 614 with, for example, a pair of hinge pins 634. In one example, there is a contoured section 648 between the hinge pins 634 of the inner wall of at least one of the brackets and the inner wall 618 of the air inlet 614. The contoured section 648 interfaces with a contoured end 650 of the projecting tabs to provide a plurality of distinct interaction possibilities. A first possibility exists when surface 651 on the projecting tabs bears on surface 652 of the inner wall, restricting rotation of the arm above a horizontal position, thereby securing the valve diaphragm in a substantially closed position.

A second possibility exists when a beveled surface 655 on the projecting tab bears on counter-beveled surface 656 on the wall. An inclined angle of this counter-beveled surface 656 causes the projecting tab to increasingly compress inward as the hanger arm 610 is pressed downward into the valve housing 606. This may occur both during inflation (by air pressure) and deflation (by manual deflection of the hanger arm to unseat the valve from the valve seat). The compression of the projecting tab also results in a counter action, so that, with removal of the downward pressure the tab "springs back" to its original position and forces the hanger arm 610 and diaphragm 602 to return to the closed position. When the hanger arm 610 is depressed fully, the projecting tabs rotate slightly beyond the counter-beveled surface 656 and lock the rotating arm in a locked open position. This locked open position maximizes airflow through the valve housing and will, under certain conditions improve efficiency of both inflation and deflation.

### SUMMARY OF INVENTION

A first aspect of the invention is direct to an inflation system assembly, comprising: an inflation device comprising a contact surface defining a fluid passage; and a valve assembly comprising a valve and a contact surface adapted to engage with the contact surface of the inflation device. A seal is formed around the fluid passage when a user applies a manual force to engage the contact surface of the inflation device with the contact surface of the valve assembly.

In some embodiments, the inflation system includes an interface device. The interface device can be moveably coupled between the fluid passage and the valve assembly. In one embodiment, the inflation device includes an activation switch and the interface device is configured to selectively actuate the activation switch upon a movement of the interface device.

In some embodiments the valve assembly is coupled to an inflatable device. The valve assembly may be integrated into an inflatable device. In some embodiments, a first portion of the interface device is configured to mate with a portion of the port. The interface device may be adapted to mate with the portion of the port by one of a threaded interface device and a bayonet mount. In some embodiments, a first portion of the interface device is configured to mate with a portion of the valve assembly. In some embodiments, the interface device is integral with the pump. The valve may be a self-sealing valve.

Another aspect of the invention is directed to an interface device configured to movably couple between a valve assembly comprising a valve, and a port for air flow of an inflation device having an activation switch, and configured to selectively actuate the activation switch, upon movement, with reference to the exhaust port, when coupled between the valve assembly and the port.

Another aspect of the invention is directed to a method of inflation, comprising: placing a contact surface of an inflation device in contact with a contact surface of a valve assembly; and applying a manual force to maintain a seal around a fluid passage between the inflation device and the valve assembly. In some embodiments, the inflation system includes an interface device and the interface device is adapted to provide the contact surface of the inflation device. In a version of this embodiment, the method further comprises the act of attaching the interface device to the inflation device. In one embodiment, the inflation system includes an activation switch and the method further comprises the act of actuating the activation switch by moving the interface device, with reference to the inflation device.

Yet another aspect of the invention is directed to an inflation device for inflating an inflatable device, the inflatable device having a valve assembly, comprising: a port for air flow; and a sealing member configured and arranged to couple to the valve assembly and to form a substantially sealed interface with the valve assembly, such that air that flows between the port and the valve assembly travels through the sealed interface.

Another aspect of the invention is directed to a cover arrangement sized and shaped for use with an inflatable device, the cover arrangement having a first region comprising a material having a first resistance to air flow and a second region having a second resistance to air flow, the first resistance being different than the second resistance. In some embodiments, the resistance to air flow of the second region is less than the resistance to air flow of the first region, and the cover arrangement is configured such that the second region aligns with an air passageway of the inflatable device when the cover arrangement is disposed on the inflatable device. In some embodiments, the thread count of the first region is less than the thread count of the first region.

Still another aspect of the invention is directed to an inflatable device comprising an inflatable bladder, at least one covering layer and a conduit sized and arranged to define a passageway from the inflatable bladder through the at least one covering layer to an outer surface of the inflatable device. In some embodiments, the inflatable device further comprises a valve fluidly coupled to the inflatable bladder and the conduit, the conduit extending from the valve to the outer surface of the inflatable device. The valve may be accessible to a user through the conduit. The valve may be disposed substantially flush with the outer surface of the bladder or the outer surface of the inflatable device. In various embodiments, the conduit may extend from the valve to the outer surface of the inflatable device or from the valve to the outer surface of the inflatable bladder. The inflatable device may be a mattress.

Another aspect of the invention is directed to a covering arrangement for a device having an inflatable bladder and a valve that is fluidly coupled to the inflatable bladder, the covering arrangement having an access opening, the covering arrangement being configured such that the access opening is aligned with the valve when the covering arrangement is disposed on the device. The device may be a mattress.

Another aspect of the invention is directed to an inflatable device comprising an inflatable bladder having a port through which air enters and exits the bladder, a flexible conduit coupled to the port, and a valve remotely located from the outlet, the valve being fluidly coupled to the port though the conduit and comprising an automatic closing structure adapted to control the release of air from the bladder.

Yet another aspect of the invention is directed to a manual inflation device adapted to couple to a valve of an inflatable device. In one embodiment, the manual inflation device includes an air chamber adapted to discharge air under pressure through a port, a fitting connected to the port and adapted to couple to the valve. In a version of this embodiment, the fitting includes an operating element.

### BRIEF DESCRIPTION OF DRAWINGS

The accompanying drawings, are not intended to be drawn to scale. In the drawings, each identical or nearly identical component that is illustrated in various figures is represented by a like numeral. For purposes of clarity, not every component may be labeled in every drawing. In the drawings:
FIGS. 1-6 are illustrations of prior art self-sealing valves;
FIG. 7 is a perspective view of an inflation system that includes a portable inflation device, a self-sealing valve, and an interface device in accordance with one embodiment of the invention;
FIG. 8A is an exploded view of the inflation system of FIG. 7;
FIG. 8B is a cross sectional view of the inflation system of FIG. 8A with the interface device in a first position according to one embodiment of the invention;
FIG. 8C is a cross sectional view of the inflation system of FIG. 8A with the interface device in a second position according to one embodiment of the invention;
FIG. 9 illustrates a cross sectional view of an inflation system according to another embodiment of the invention;
FIGS. 10A-10B are cross sectional views of another embodiment of an inflation system that includes a portable inflation device, a self-sealing valve and an o-ring in accordance with one embodiment of the invention;
FIG. 10C is a cross sectional view of an air passageway and the o-ring illustrated in FIG. 10A taken along line 10C-10C of FIG. 10A;
FIGS. 11A-11D illustrate another aspect of the present invention comprising a covering arrangement having two regions for covering an inflatable mattress according to one embodiment of the invention;
FIGS. 12A-12E illustrate an inflatable mattress having an access point in accordance with one embodiment of the invention;
FIG. 12F is an enlarged view of an activation device as illustrated in FIG. 12D according to one embodiment of the invention;
FIGS. 13A-13C illustrate a cover and an access opening for accessing a valve in an inflatable bladder in accordance with one embodiment of the invention;
FIG. 14A is an illustration of another aspect of the present invention in which control of air into and/or out of an inflatable device is controlled at location that is remote from an access point on the inflatable device according to one embodiment of the invention;
FIG. 14B is a side view of another embodiment of an inflatable device in which control of air into and/or out of the inflatable device is controlled from a location that is remote from an access point on the inflatable device;
FIG. 14C is a plan view of the inflatable device of FIG. 14B according to one embodiment of the invention;
FIG. 15 is an enlarged view of an activation device according to another embodiment of the invention;
FIGS. 16A-16B are illustrations of a valve assembly in accordance with one embodiment of the invention;
FIGS. 17A-17B are cross-sectional views of the valve assembly of FIGS. 16A-16B according to one embodiment of the invention;
FIG. 18 is an illustration of a user employing the valve assembly of FIGS. 16A-16B in accordance with one embodiment of the invention;
FIGS. 19A-19C are cross-sectional views of a manual inflation device and a valve assembly in accordance with one embodiment of the invention;
FIGS. 19D-19F are cross-sectional views of a manual inflation device and a valve assembly in accordance with another embodiment of the invention; and
FIG. 20 illustrates a valve assembly with a pressure indicator according to another embodiment of the invention.

### DETAILED DESCRIPTION

This invention is not limited in its application to the details of construction and the arrangement of components set forth in the following description or illustrated in the drawings. The invention is capable of other embodiments and of being practiced or of being carried out in various ways. Also, the phraseology and terminology used herein is for the purpose of description and should not be regarded as limiting. Use herein of the terms "including," "comprising," or "having," "containing," "involving," and variations thereof, is meant to encompass the items listed thereafter and equivalents thereof as well as additional items.

There is a need to turn off and turn on portable inflation devices configured with the sensing device disposed in a location inaccessible to a user (e.g., see the inflation device of FIG. 1 where a sensing device is located in a mouth of the inflation device) and configured without an external ON/OFF switch. There is a need to enable such inflation devices to be coupled with a variety of inflatable devices. Also, it is envisioned that the variety of inflation devices with which one or more embodiments of the invention may be used include inflation devices that interface with inflatable devices as discussed herein whether or not they include a sensing device disposed in a location inaccessible to a user.

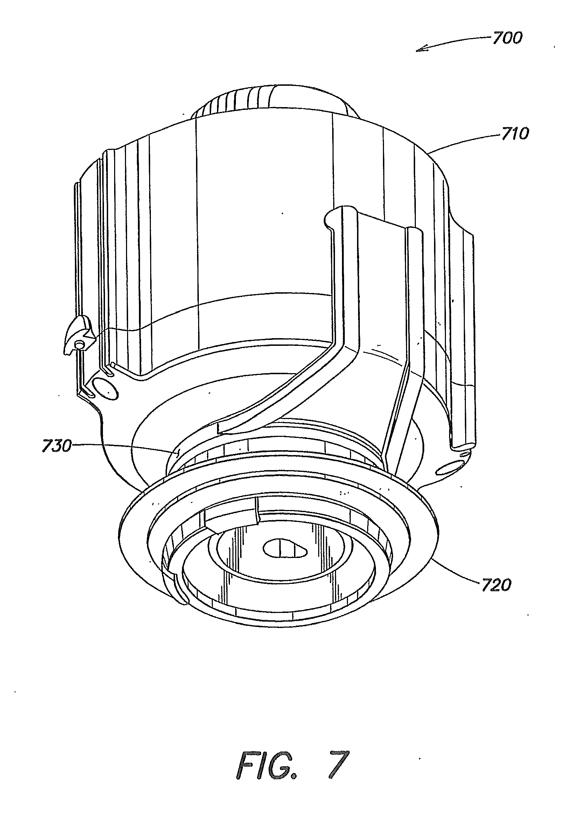

FIG. 7 illustrates a perspective view of an inflation system 700 that includes a portable inflation device 710 as discussed above with reference to FIG. 1 having a sensing device, a self-sealing valve 720 as discussed above with reference to FIGS. 2-6, and an interface device 730. It is to be appreciated that the self-sealing valve can be integrated into an inflatable device, such as an air mattress, and that Fig. 7 merely illustrates the interconnection of the elements.

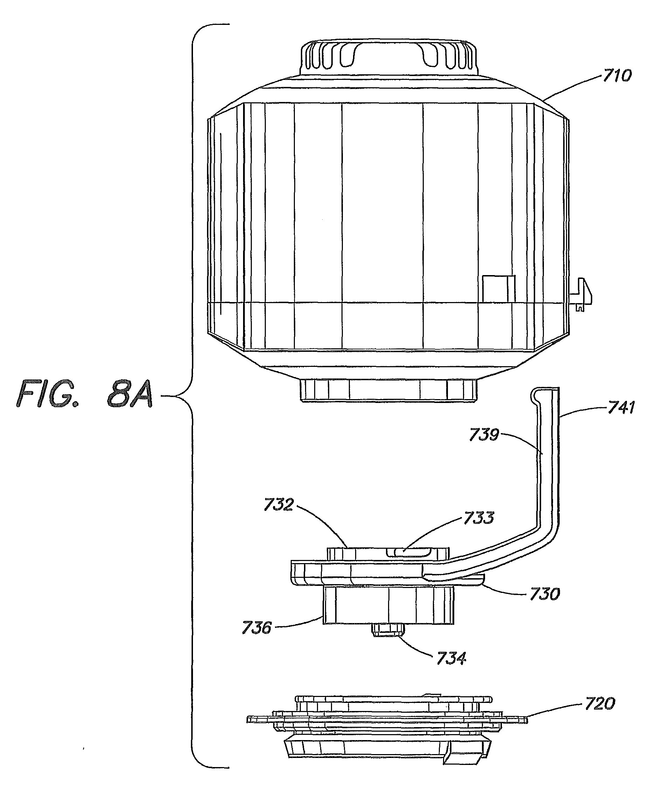

Referring to FIG. 8A, there is illustrated the portable inflation device 710, the interface device 730 and the self-sealing valve 720, with the three elements disconnected from one another. The interface device 730 includes a protrusion 733 on an upper portion 732 of the interface device that can be configured to mate with corresponding structure at an air intake and/or exhaust port of the portable inflation device 710. In addition, the interface device 730 can also include a protrusion at a bottom portion 736 of the interface device 730 for mating with corresponding structure of the self-sealing valve 720. These protrusions and corresponding structures of the portable inflation device 710 and the self-sealing valve 720 allow the interface device 730 to be located into and out of engagement with the self-sealing valve 720 and into and out of engagement with the portable inflation device 710. The protrusions (e.g., protrusion 733) and corresponding structure of the portable inflation device 710 and self-sealing valve 720 can be any mating structure used in the art, such as threads and mating threaded receptacles, bayonet protrusions and mating bayonet receptacles and the like. For example, in some embodiments, structure used to apply a mechanical force to secure the interface device 730 to the valve 720 may include a rim or one or more angled surfaces to help form a seal (e.g., an air-tight seal) between the interface device 730 and the valve 720. In one embodiment, protrusions are located on the interface device 730 at a location other than the bottom portion 736. In one or more embodiments, the seal formed between the interface device 730 and the valve 720 provides a substantially air-tight fluid passageway between the inflation device 710 and the valve 720.

In addition, the interface device includes a protrusion 734 at the lower portion of the interface device 730 that, in one embodiment, can bias a support arm and diaphragm of the self-sealing valve to an open position, when the interface device is moved into engagement with the corresponding structure of the self-sealing valve. However, it is to be appreciated that the interface device 730 need not include protrusion 734 as the inflation pressure of the portable inflation device 710, as well as the pressure within the inflatable device in which the self-sealing valve 720 can be integrated, can provide sufficient pressure to bias open and to maintain the self-sealing valve 720 in a closed position, respectively. According to one embodiment, the interface device 730 is configured to be moved by a user using a handle 739 such that the interface device 730 rotates, for example, about the outer housing of the portable inflation device. According to one embodiment, the handle 739 includes a region 741 that is substantially flat. In another embodiment, the region 741 includes a cylindrical shape or a portion of a cylindrical shape. That is, the region 741 of the handle 739 is a knob in one embodiment.

According to one embodiment, upon rotation of the interface device 730, a protrusion 733, (e.g., a bayonet contact) engages the sensing device located in the mouth of the inflation device to activate and deactivate the fluid moving capability of the portable inflation device when, at least the interface device 730 and the portable inflation device 710 are coupled together, and also when a11 of the three elements are combined as illustrated in FIG. 7.

That is in one embodiment, the interface device 730 is configured so that as it is rotated about the outer housing of the portable inflation device 710 in a first direction (e.g., counterclockwise when the inflation device 710 is viewed from the end opposite the interface device 730), the protrusion is rotated so that it contacts a contact of a switch to bias-on the portable inflation device. Similarly, the interface device 730 is configured so that when it is rotated in an opposite direction (e.g., clockwise), it can disengage from contacting the contact of the switch so that the portable inflation device 710 is biased-off. With this arrangement, the interface device 730 can be rotated about the outer housing of the portable inflation device to bias-on (and in some embodiments to bias-off) the portable inflation device. In some embodiments, the device may turn off when it is not biased-on.

The portable inflation device can be powered by an AC power source. For example, the device may also comprise an AC motor instead of the DC motor described above, or may comprise an AC to DC converter (e.g., a rectifier) that converts the AC line voltage to a suitable DC voltage to operate the DC motor described above.

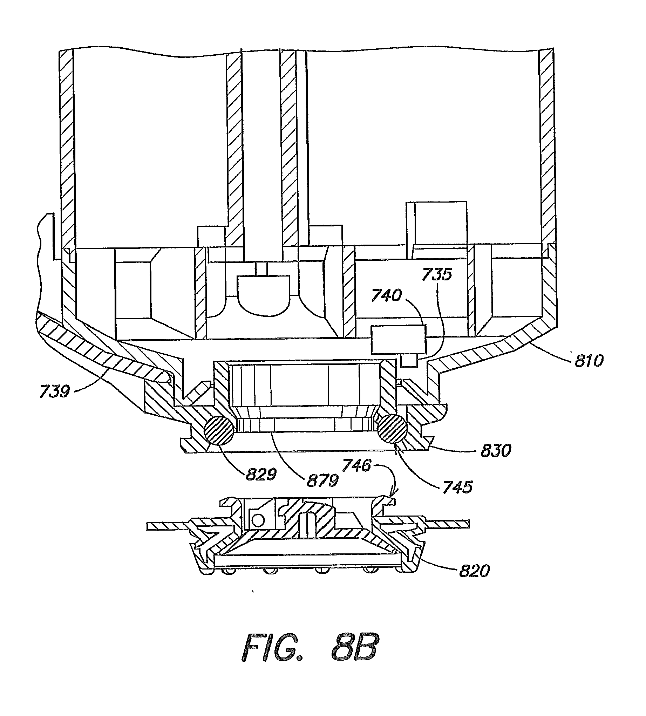

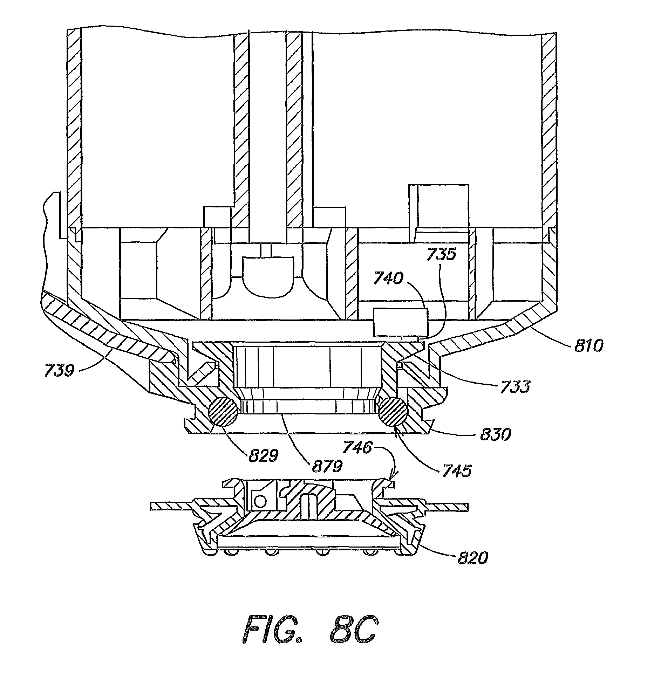

FIGS. 8B and 8C illustrate, in cross section, the interface device 830 in two different positions relative to the portable inflation device 810 according to an embodiment of the invention. FIG. 8B illustrates the combined assembly of the portable inflation device 810 and the interface device 830 where the interface device 830 is in a first position relative to the portable inflation device 810. As illustrated in FIG. 8C, the interface device 830 is in a second position relative to the portable inflation device 810. The combined assembly of the portable inflation device 810 and the interface device 830 is not engaged with the valve 820 in both FIGS. 8B and 8C.

According to one embodiment, the portable inflation device 810 includes a switch 740 and switch contact 735 that are used in an electrical circuit to turn on and turn off the portable inflation device 810. The interface device 830 provides the advantage that the portable inflation device 810 need not be moved into and out of engagement with the self-sealing valve 820 to turn on and to turn off the portable inflation device 810. One advantage of the interface device 830 is that it provides for the portable inflation device 810 to remain connected to the self-sealing valve 820 of the inflatable device and to be maintained in an off state, and also provides structure to turn on the portable inflation device 810 to inflate the inflatable device to a desired pressure without the need to connect or disconnect the portable inflation device 810. It is to be appreciated that the interface device 830 may function to couple a self-sealing valve 820 and an inflation device 810 that would otherwise not couple together (i.e., the interface device may operate as an adapter in addition to providing a structure to turn on and off the inflation device). As described above, in instances where the inflation device 810 and the self-sealing valve 820 would fit together absent the interface device 830, the interface device 830 may simply provide a structure to turn on and turn off the inflatable device.

In other embodiments, the structure provided by the interface device 830 is included as an integral part of the portable inflation device 810. For example, the structure provided by the interface device 830 can be included in the portable inflation device 810 as originally manufactured. Embodiments of the interface device 830 may also be incorporated into inflation devices regardless of the structure utilized to turn the pump on and off. Further, in alternate embodiments, the structure provided by the interface device 830 may be included as an integral part of the valve of an inflatable device.

In the embodiment illustrated in FIG. 8B, the interface device 830 includes a somewhat compressible and resilient flexible ring, e.g., an o-ring 829. A fluid passageway 879 (e.g., a port for air flow) can be defined by the o-ring 829 (e.g., an inner diameter of the o-ring 829). In one embodiment, the o-ring 829 provides a contact surface 745 that may include a region of the outer wall of the o-ring 829.

According to one embodiment, the valve 820 includes a rim that provides a contact surface 746 that is adapted to engage the contact surface 745 provided by the interface device 830. A seal between the portable inflation device 810 and the self-sealing valve 820 is formed by the o-ring 829 when the contact surface 745 is pressed into engagement with the contact surface 746. According to one embodiment, the interface device 830 is pressed into engagement with the valve 820 by manual force supplied by the user. According to one embodiment, the seal formed when manual pressure is applied to engage the contact surfaces 745, 746 is weakened and/or broken when the manual pressure is removed. In other embodiments, mechanical force presses the interface device 830 into engagement with the valve 820. For example, a bayonet type connection may secure the interface device 830 in engagement with the valve 820 after a user engages the interface device 830 and the valve 820 and rotates the interface device 830 into a "locked" position. Screws, bolts and other types of fasteners provide additional examples of devices and structure that can be used to provide pressure to the engagement of the contact surface 745 and the contact surface 746 as a result of a mechanical force.

According to one embodiment, the o-ring 829 is adapted to engage the self-sealing valve 820 in a manner such that a seal of adequate quality is formed between the inflation device 810 and the self-sealing valve 820 assembly while the inflation device 810 is held in position by a user, so as to permit pressurized air from the inflation device to be provided to an inflatable device to which the self-sealing valve 820 is attached (not shown). In some embodiments, the o-ring is made of a compliant material, such as a soft silicone material, so that a substantially air-tight seal is formed with the valve. According to one embodiment, the seal is substantially leak-free when the inflation device 810 is held in position by the user. In another embodiment, where the interface device 830 is not used, the o-ring 829 is located at an air outlet of the inflation device 810, e.g., around a periphery of the air outlet. In one version, a seal can be formed using this embodiment by pressing the inflation device 810 into contact with the self-sealing valve 820 with manual force.

As mentioned above, the interface device 830 is illustrated in a second position in Fig. 8C. According to one embodiment, the second position may be reached, for example, when the interface device 830 has been rotated relative to the portable inflation device 810 (i.e., using the handle 739) such that the protrusion 733 engages the contact 735 of the switch 740. The engagement of the protrusion 733 with the contact 735 closes an electrical contact within the switch 740 (e.g., a limit switch) to, for example, start a motor included in the inflation device 810. In some embodiments, the protrusion 733 may be included in a plurality of protrusions that are used to secure the interface device 830 to the portable inflation device 810.

As shown in FIG. 8C, in one embodiment, the portable inflation device 810 does not need to be engaged with the valve 820 to be turned on. Further, in one embodiment, the valve 820 will remain closed until the contact surface 745 engages with the contact surface 746 and the portable inflation device 810 is turned on.

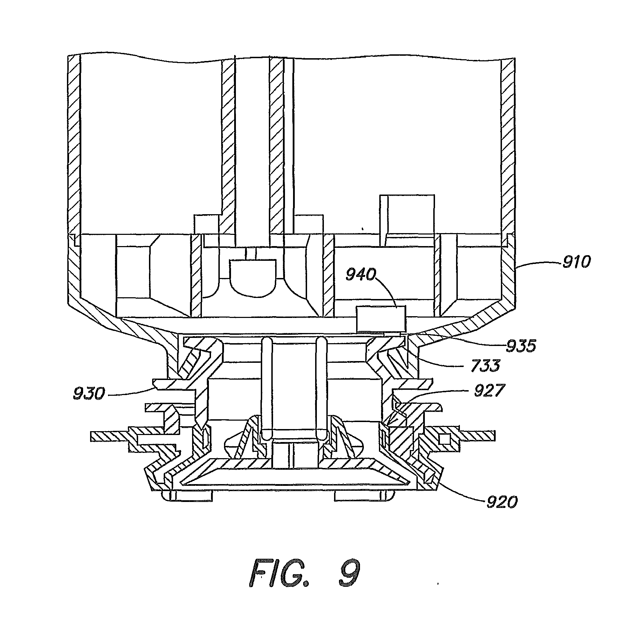

FIG. 9 illustrates a cross sectional view of the combination of a portable inflation device 910, an interface device 930, and a self-sealing valve 920 according to another embodiment of the invention. In one embodiment, the portable inflation device 910 shown in FIG. 9 turns on when the combination interface device 930 and inflation device 910 is pressed into engagement with the valve 920 and rotated. In one embodiment, the interface device 930 is first rotated to engage with the self-sealing valve 920 and the portable inflation device 910 can then be rotated relative to interface device 930 to turn on the portable inflation device 910.

The portable inflation device 910 can include a switch 940 and a switch contact 935 that are used to turn on the portable inflation device 910 when the portable inflation device 910 is rotated such that a protrusion included in the interface device 930 (e.g., the protrusion 733) is engaged with the switch contact 935.

In the embodiment illustrated in FIG. 9, the interface device 930 is engaged with the valve 920 and rotated such that a contact mating surface 927 provides a seal between a contact surface of an interface device 930 and a contact surface of the valve 920. In one embodiment, a bayonet style connection is used to secure the interface device 930 to the valve 920 (e.g., to provide mechanical force).

Similarly, the inflation device 910 is secured to the interface device 930 in one embodiment of the invention such that the inflation device 910 is pressed into engagement with the interface device 930 where the inflation device 910 can be rotated in at least two positions relative to the interface device 930. In a first position, the inflation device 910 is in a position whereby the switch contact 935 is not engaged by any of the protrusions included in the interface device 930. In the second position, as illustrated in FIG. 9, the inflation device 910 is rotated relative to the interface device 930 such that a protrusion engages the contact of the switch 940. In one embodiment, the switch 940 is a limit switch with an electrical contact that is closed when the switch contact 935 is engaged with a protrusion.

In alternate embodiments, the contact mating surface 927 and the application of a mechanical force to secure the inflation device 910 to the valve 920 are provided regardless of the structure used to turn the inflation device 910 on or off (i.e., the switch 940 may not be used with one or more embodiments). Further, in one or more embodiments, an interface device 930 may be used where a combination of manual force is applied to a contact surface and mechanical force results from an interlock (e.g., a bayonet type connection) between the interface device 930 and the valve 920.

As illustrated in FIG. 9, the valve 920 will be biased open when the inflation device 910 is operating.

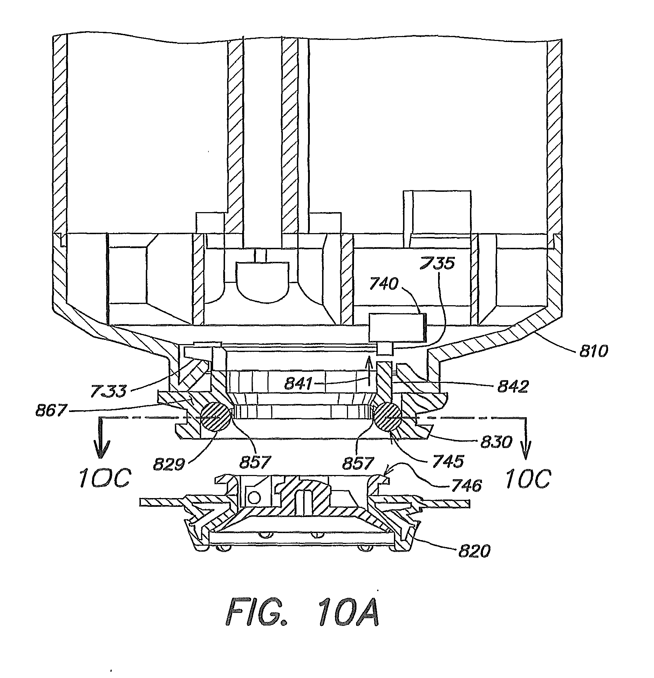

FIG. 10A is a cross sectional view of another embodiment of an inflation system that includes a self-sealing valve 820 and a portable inflation device 810. In one embodiment, no threads or bayonet connector are included for coupling the self-sealing valve 820 of FIG. 10A to the inflation device 810 (e.g., coupling via the interface device 830). Instead, in one embodiment the interface device 830 includes a somewhat flexible ring, e.g., an o-ring 829 that is configured to engage with a rim of a fluid passageway of a self-sealing valve assembly. In another embodiment, the o-ring 829 is included in the portable inflation device 810 and the interface device 830 is not employed.

In addition, in one embodiment, the portable inflation device 810 shown in FIG. 10A can be turned on when the portable inflation device 810 is pressed into engagement with the valve 820 via the interface device 830. According to one embodiment, the manual force applied by a user is sufficient to turn on the inflation device. In a version of this embodiment, the manual force is applied substantially parallel to the direction of air flow into the valve 820. In a version of this embodiment, the manual force is applied substantially parallel to the direction of air flow through an outlet (e.g., a port) of the inflation device.

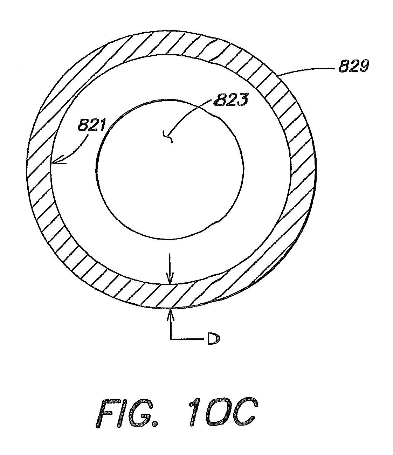

FIG. 10C is a cross sectional view of the valve assembly and inflation device illustrated in FIG. 10A, taken along line 10C-10C having an air passageway 823 and the o-ring 829. FIG. 10C illustrates a contact surface 821 along which a seal is formed between the o-ring 829 and the valve assembly 820. Air flows through passageway 823 located within the contact surface 821. It is to be appreciated that although an o-ring is illustrated, a sealing member of any suitable shape (e.g., square, oval, or an irregular shape) may be used. For example, the ring has an overall diameter size suitable for forming a seal around the rim of the fluid passageway of the valve. The ring may, for example, have a diameter D of 0.5 inches.

Referring again to FIG. 10A, in some embodiments, the o-ring 829 is coupled to the inflation device using a region 842 (e.g., a displaceable region). The region 842 may be made of any suitable construction such that pressure between the self-sealing valve assembly 820 and the o-ring 829, occurring as a result of engagement of the inflation device 810 with the self-sealing valve assembly 820, causes the region (or apparatus coupled to the region) to be displaced. According to one embodiment, the region 842 engages the switch 740 (e.g., a toggle switch, a limit switch, etc.) so as to apply a force to the contact 735 when the region 842 is so displaced. In one embodiment, the region 842 is not displaceable but the contact 735 is displaceable.

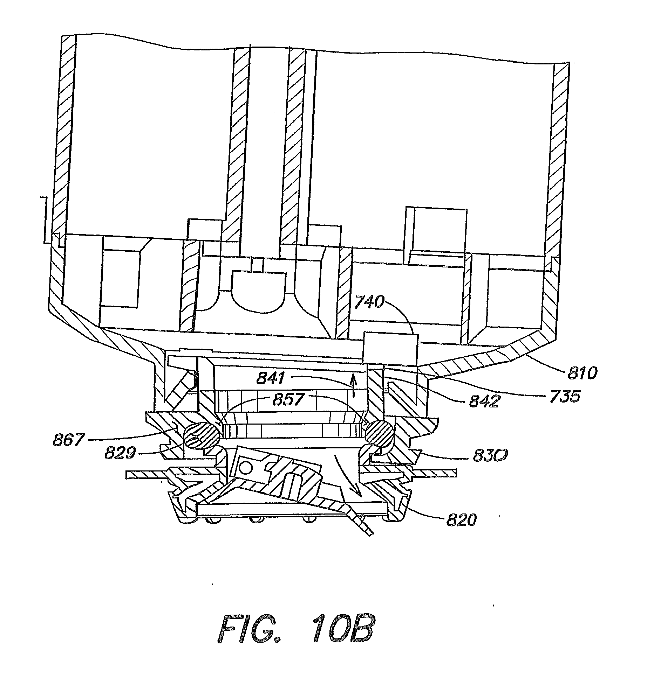

As illustrated in FIG. 10B, when the inflation device 810 is engaged with the self-sealing valve 820 with sufficient pressure, the region 842 is displaced in a manner to apply a force to the switch 740 and thereby operate the switch contact 735, for example, in the direction of arrow 841 to turn on the portable inflation device 810. However, it should be appreciated that any suitable technique of activation upon displacement of the region of the inflation device 810 may be used and the inflation device need not include the switch 740.

In some embodiments, the region 842 is resilient such that as force is removed from the o-ring 829 (i.e., the o-ring 829 is disengaged from the valve assembly 820), the region 842 returns to its shape prior to engagement with the self-sealing valve 820, and the inflation device 810 is turned off. For example, the region 842 may include a molded spring. In some embodiments, the molded spring may be constructed of ABS (Acrylonitrile Butadiene Styrene). It is to be appreciated that an inflation device 810 constructed as described here provides an embodiment of the inflation device 810 with an automatic on-off system.

One example of an inflation device that can be configured as described herein is an axial pump as described in U.S. Patent Application No. 10/113,836 to Chaffee, filed April 1, 2002, titled PUMP WITH AXIAL CONDUIT, which may be modified to include an o-ring 829 (or other sealing member) and a region 842 as described above. The content of U.S. patent application No. 10/113,836 is herein incorporated by reference.

According to one embodiment, the inflation device 810 can be displaced when it is engaged with the self-sealing valve assembly 820 because the interface device 830 allows some freedom of movement in a direction parallel with the arrow 841. In one embodiment, the interface device 830 includes an outer section 867 (e.g., an outer cylindrical shaped section) and an inner section 857 (e.g., an outer cylindrical shaped section). In a version of this embodiment, the outer section 867 and the inner section 857 engage a radially inner and a radially outer section, respectively, of the o-ring 829. According to one embodiment, the outer section 867 and the inner section 857 are connected at a location that extends less than 360° about the opening 823 that appears in FIG. 10C. For example, referring to FIG. 10A, the outer section 867 and the inner section 857 can be attached as shown in the region adjacent the o-ring 829 illustrated in the left side of FIG. 10A while they are not attached in the region adjacent the o-ring 829 illustrated in the right side of FIG. 10A. As a result, the inflation device 810 can be displaced when it is engaged with the self-sealing valve assembly 820.

Referring again to FIG. 10B, the inflation device 810 and interface device 830 are pressed into engagement with the self-sealing valve 820. As pressure is applied to further engage the interface device 830 and the self-sealing valve 820, the interface device 830 begins to flex. More specifically, the region of the interface device 830 (on the right side of FIG. 10B) where the outer section 867 and the inner section 857 are not connected allows the unconnected section of the outer section 867 to flex in the direction of the self-sealing valve 820. As a result, the region 842 is pressed against the switch contact 735 to turn on the inflation device 810. In one embodiment, the structure described above is integral with the inflation device 810.

While the above embodiment of an inflation device includes an automatic on-off system, it is to be appreciated that advantages of an o-ring (e.g., the ability to form a seal with a valve assembly) may be achieved without an automatic system. In such a system, a switch may be provided in a location on the inflation device that is accessible to a user of the inflation system. It is also to be appreciated that in a non-automatic system, a fixed mount (rather than a displaceable mount) will typically be used to maintain the o-ring in contact with the valve.

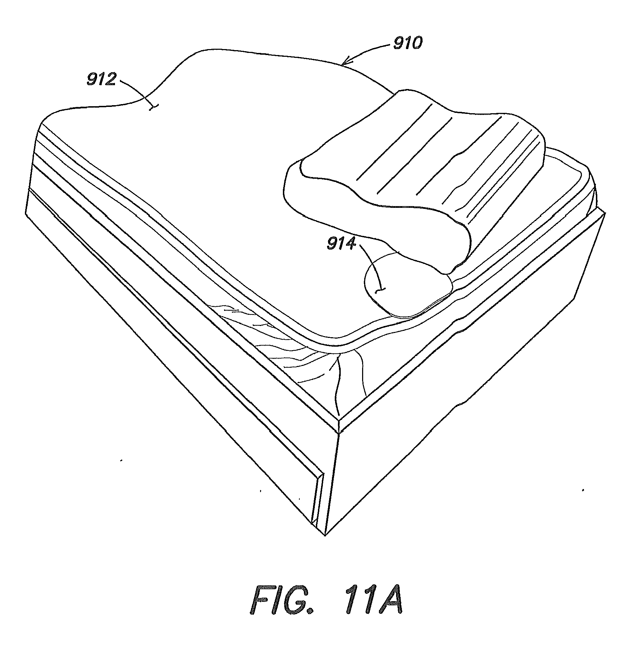

FIGS. 11A-11D illustrate another aspect of the disclosure comprising a covering structure (also referred to herein as a covering layer) such as a sheet 910 for covering an inflatable mattress. Although the invention is discussed with reference to a mattress, it is to be appreciated that any inflatable device to be covered by a sheet or other suitable covering structure is within the scope of this aspect of the invention.

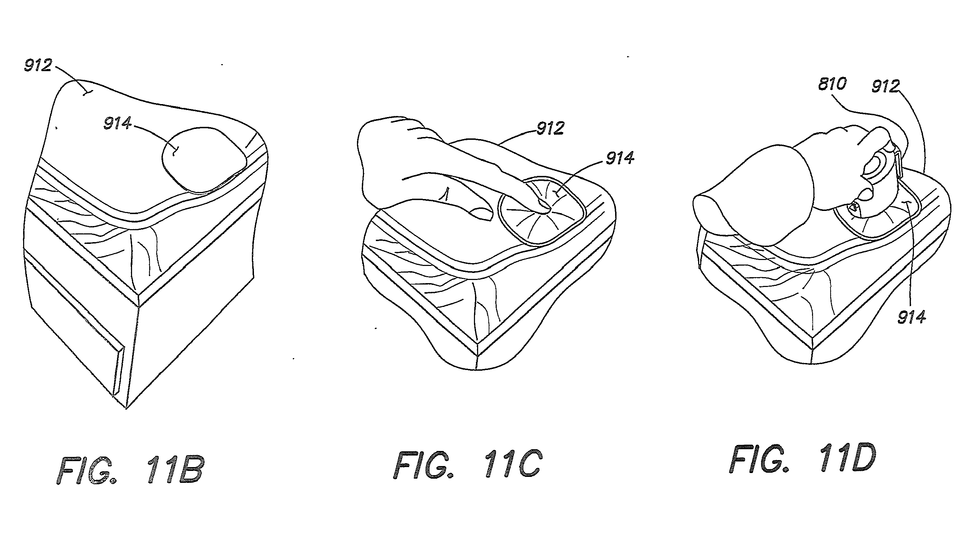

As illustrated in FIGS. 11A and 11B, the sheet 910 comprises two regions. A first region 912 typically covers a majority of the mattress and a second region 914 covers at least a valve of the inflatable device. The first region 912 may be selected to have any suitable qualities. For example, in embodiments where the inflatable device is an air mattress, the first region 912 may be selected for comfort or other parameters used to select a conventional bed sheet. For example, in the first region 912, the sheet may have a high thread count to provide a suitable comfort layer to a user of the mattress. Although the second region 914 is illustrated on the top surface of the inflatable device, it is to be appreciated that the second region 914 could be located on a side surface or other suitable surface of the inflatable device. The second region 914 need not be on a horizontal surface of the inflatable device.

The second region 914 is selected such that an inflation device, configured as described above, can be engaged through the second region 914 to a self-sealing valve (e.g., the self-sealing valve 720) so that pressurized air from an inflation device, such as an inflation device discussed above, can be injected into the mattress (e.g., using an inflation device or by a user blowing air from his/her mouth through the self-sealing valve) through the second region 914 as illustrated in FIG. 11D. (FIG. 11D illustrates a portable inflation device 810 engaged through the second region 914.) For example, in some embodiments, the thread count may be lower, or a different, more open-weave material may be employed in the second region 914 than in the first region 912 such that the resistance to the flow of pressurized air from the inflation device 810 is diminished relative to the first region 912. However, it is to be appreciated that any suitable arrangement providing for the injection of air through the second region 914 such as, for example, a mesh structure, a foam-backed mesh structure, or the like may be used. For example, the second region 914 may be selected to operate with a conventional pump which provides in the range of 10-20 cubic feet of air per minute. Further, in one embodiment, the air is supplied within a pressure range of .2-1.5 pounds per square inch.

It is to be appreciated that the herein-described inflation devices including an o-ring coupling mechanism as discussed above are particularly suited for inflation through a sheet. When the o-ring of an inflation device is aligned with a suitably sized and arranged valve assembly of the air mattress and pressed thereagainst, air can be injected through the sheet to inflate the mattress. The inflation device may be an automatic system or may have a user operated switch as discussed herein. It is to be appreciated that the capability to inflate through the sheet eliminates the need to remove the sheet when inflating or deflating the mattress.

In some embodiments, as illustrated in FIG. 11C, the second region of the covering layer or sheet is configured so that the valve may be manipulated through the second region 914 such that air is released when the valve is depressed through the second region 914. In some embodiments, the second region 914 is selected such that the valve can be suitably tactilely sensed by user manipulating the valve such that the user can feel features of the valve and can determine that the valve is being manipulated. For example, the valves discussed above with reference to FIGS. 2-6 may be suitable for regulating the amount of air pressure in the inflatable mattress through a suitably constructed second region of the covering layer. While the above covering layer was discussed as having two regions, in some embodiments, it may be advantageous to have a covering structure suitably sized and shaped for use with an inflatable device (e.g. a mattress) made of only material as described above for use in the second region.

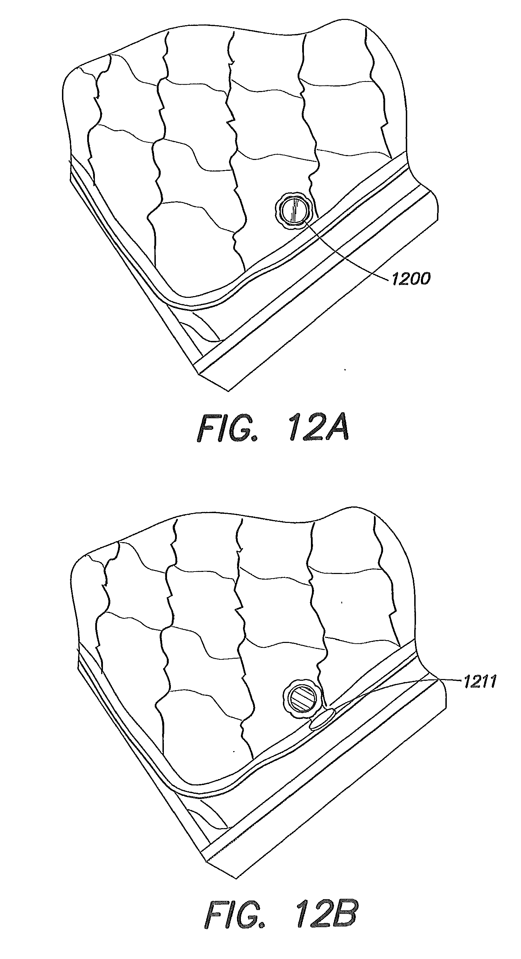

FIGS. 12A-12F are illustrations of another aspect of the present invention in which an air pump access point 1200 is provided substantially flush with a surface of a mattress (e.g., substantially flush with an outer surface of a mattress topper). It is to be appreciated that although the present aspect of the invention is discussed with reference to a mattress, any suitable inflatable device (e.g., a pillow, chair sofa or other body support device) having one or more covering layers may include an access point 1200 according to this aspect of the invention. Although the access point 1200 is illustrated on the top surface of the inflatable device, it is to be appreciated that the access point could be located on a side surface or other suitable surface.

In some conventional inflatable apparatus, it is necessary to remove cushioning and/or topper layers of the mattress to reach the access point and inflate the bladder. In other conventional mattresses, a hose of sufficient length is coupled to the air bladder such that a pump and valve combination may be remotely located, for example, the pump and valve may be located on a floor next to the mattress. In such embodiments, the hose may be cumbersome and unsightly. According to aspects of the present invention, the self-sealing valve and/or access point are flush with an outer surface of the mattress to facilitate coupling of the air pump to the inflatable bladder.

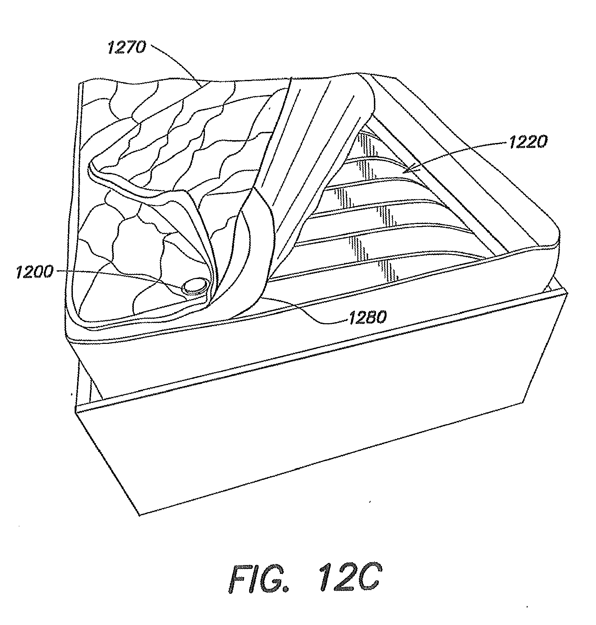

FIG. 12A illustrates an embodiment of an air mattress having an access point 1200 that is substantially flush with an outer surface of the mattress. In the illustrated embodiment, the access point is located on top of the mattress for easy access by a user lying on the bed.
Optionally, as illustrated in FIG. 12B, the access point may be adapted to receive a cover 1211. The cover 1211 may be screwed, snapped or otherwise secured over the access point with any suitable structure used in the art. FIG. 12C illustrates that the mattress may comprise multiple layers disposed between a bladder/fluid chamber 1220 and the outer surface of the mattress. For example, the layers may include a cushioning layer 1280 and a topper layer 1270.

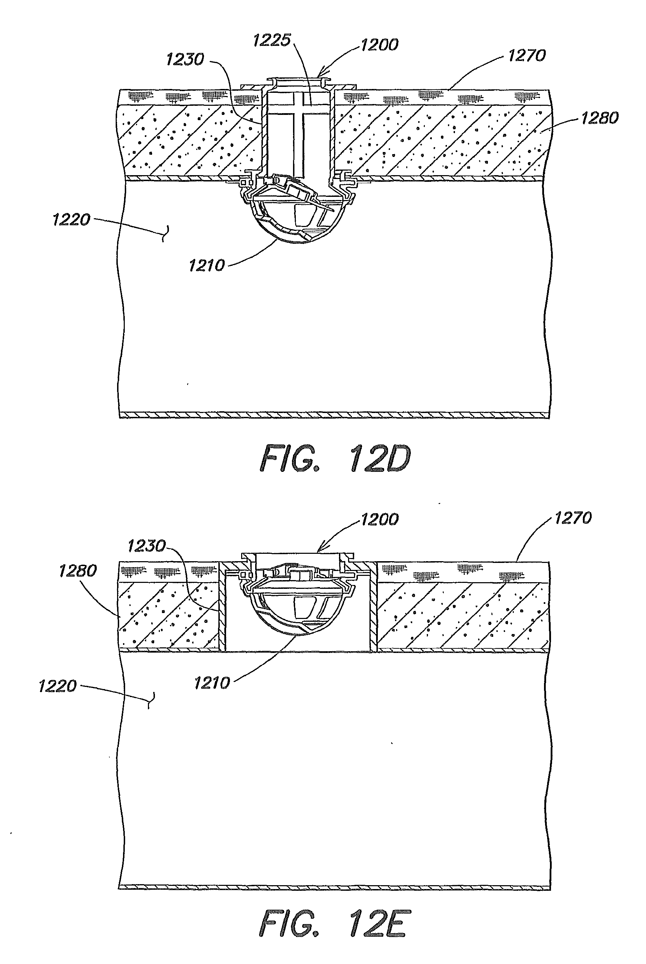

In some embodiments, such as the embodiment illustrated in FIG. 12D, a valve 1210 (e.g., a self-sealing valve as described herein) may be located at a surface of the inflatable bladder 1220, and a fluid conduit 1230, such as a tube, that extends from the valve 1210 to the surface of the mattress may be provided. That is, the fluid conduit extends through the cushioning layer 1280 and the topper layer 1270. In such embodiments, an access point 1200 is formed at the end of the fluid conduit 1230.

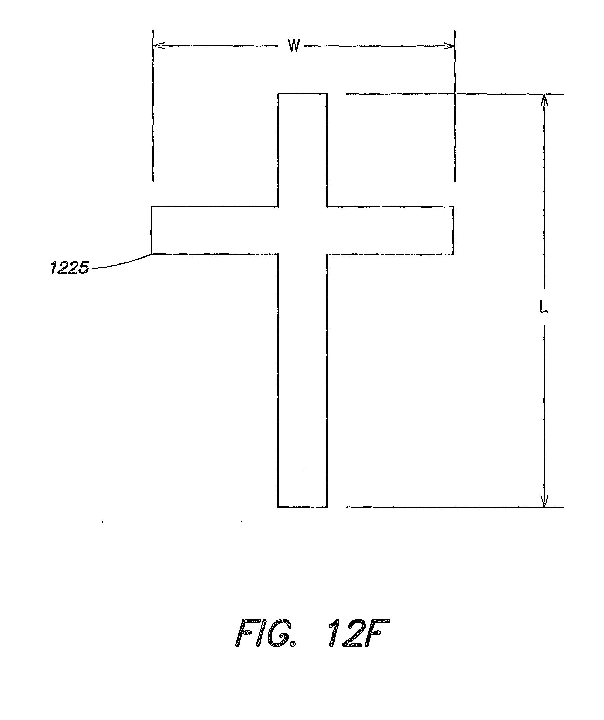

Additionally, in such embodiments, it may be advantageous to include an activation device 1225 configured to enable a user to manipulate valve 1210 from the surface of the mattress. An enlarged view of activation device is illustrated in FIG. 12F. For example, the activation device may be configured such that a user can press on the top of the activation device 1225 to manipulate the valve to release air from the bladder. In some embodiments, the activation device has a length L substantially equal to the distance from the top of the valve to the top of the mattress. In some embodiments, the width W is selected to be substantially equal to the width of fluid conduit 1230 such that the activation member remains upright when placed in the conduit. In some embodiments, the activation device is selected such that when the activation device is placed in the conduit, substantial free space remains in the conduit, such that an inflation device provided at access point 1200 will be able to inflate inflatable bladder 1220 while the activation device is in place. The activation device may be removable from the fluid conduit and/or may be fixed in the conduit, by attachment to the valve or the conduit. One suitable configuration of the activation device is in a cross shape as illustrated in FIGS. 12D and FIG. 12F. However, any suitable shape may be used, for example, any suitable shape that allows activation of the valve where the valve is recessed below the surface of the mattress.

In other embodiments, such as the embodiment illustrated in FIG. 12E, the fluid conduit 1230 may extend from the air mattress to an outer surface of the mattress; and valve 1210 (e.g., a self-sealing valve as described herein) may be located at a location proximate to the topper layer 1270 of the mattress such that the valve is accessible to a person lying on the mattress. In such embodiments, an inflation device may be easily coupled to the valve, and upon removal of the inflation device, the valve may be manipulated in a manner as described above to release air from the mattress.

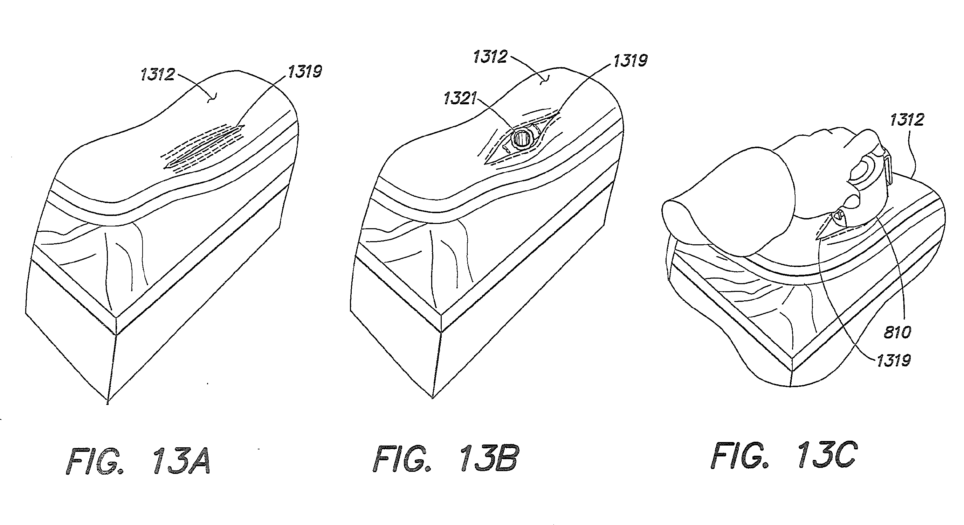

FIGS. 13A-13C illustrate an embodiment of a covering device 1312 for an inflatable device. The covering device 1312 has an access opening 1319 through which contact with an access point 1321 in the inflatable device can be achieved. The access point may, for example, be coupled to a valve of the inflatable device. The access opening 1319 is located such that it is aligned with the access point 1321 when the covering device 1312 is disposed on the inflatable device. Although the access opening 1319 and access point 1321 are illustrated on the top surface of the inflatable device, it is to be appreciated that the access opening and access point could be located on a side surface or other suitable surface.

For example, the covering device 1312 may be used with an inflatable mattress, and the access opening 1319 may be aligned with an access point coupled to a valve of an inflatable bladder of the mattress. The access point 1321 may be substantially flush with an outer surface of the mattress as discussed above with reference to FIGS. 12A-12E, and in some embodiments, a valve may be flush with an outer surface of the mattress. The access opening 1319 may have any shape suitable for providing contact with the access point 1321. In some embodiments, as illustrated in FIG. 13C, the access opening 1319 has a shape and size suitable for engaging the access point 1321 disposed therein with an inflation device 810 as illustrated in FIG. 13C. The access opening 1319 may be sealable using any fastener structure used in the art such as one or more buttons, a zipper, or a hook-type fastener.

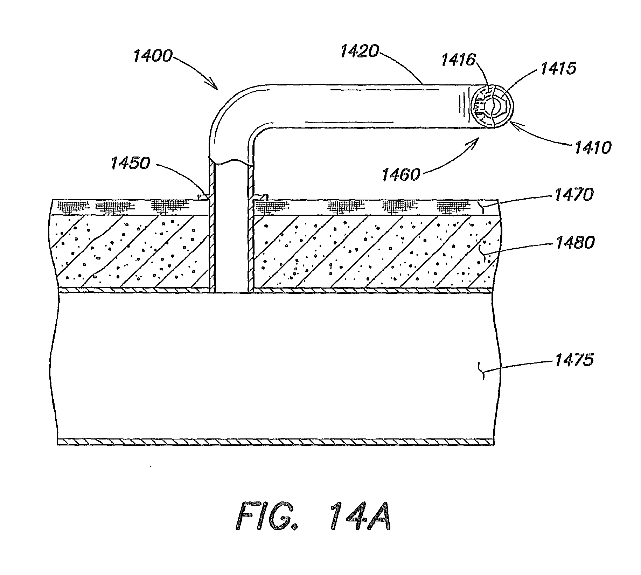

FIG. 14A is an illustration of another aspect of the present invention in which control of air into and/or out of an inflatable device 1400 can be controlled at a location 1460 that is remote from a port 1450 of the mattress. It is to be appreciated that although the embodiment illustrated in FIG. 14A comprises a mattress, embodiments of the invention may comprise any suitable inflatable device (e.g., a body support device such as a pillow, chair sofa, or an inflatable toy or other inflatable device). The port 1450 illustrated in FIG. 14A can be located on any surface of the inflatable device 1400 including a side surface, a top surface, or a bottom surface.

FIG. 14A illustrates an embodiment of inflatable device 1400 comprising a bladder 1475 and a valve 1410 having an automatic closure apparatus 1415 through which air can be injected into or released from the inflatable device. In the illustrated embodiment, valve 1410 is fluidly coupled to inflatable device 1400 through a conduit 1420, which permits the valve to be located remote from the port 1450. In some embodiments, valve 1410 is user accessible, such that it can be opened by user manipulation (for both inflation and deflation), and air may thereby be added or released from the bladder. Alternatively, mechanical and/or electrical structure may be provided which permits the valve to be indirectly manipulated by the user to add or release air from the bladder.

In some embodiments, the conduit 1420 is selected to have a length such that valve 1410 can be conveniently reached by a person using the inflatable device in an intended manner (e.g., in the instance of a mattress, the person may be lying on the mattress). In mattress embodiments, the conduit may be long enough such that valve 1410 may be disposed in a person's hand when he is lying on the mattress. In some embodiments, in which the inflatable device is a mattress, the mattress may comprise a topper layer 1470 and a cushioning layer 1480, and the mattress may be covered by a mattress sheet (not shown), such as a sheet as described above with reference to FIG. 13A-13C. In such embodiments, the conduit may extend through multiple layers (e.g., a topper layer 1470, a cushioning layer 1480) and/or a mattress sheet.

Preferably, conduit 1420 is made of a material that is substantially air impermeable. Typically, the conduit is made of material that is flexible so that valve 1410 can be conveniently moved to a position that is convenient for operation by a person using the inflatable device.

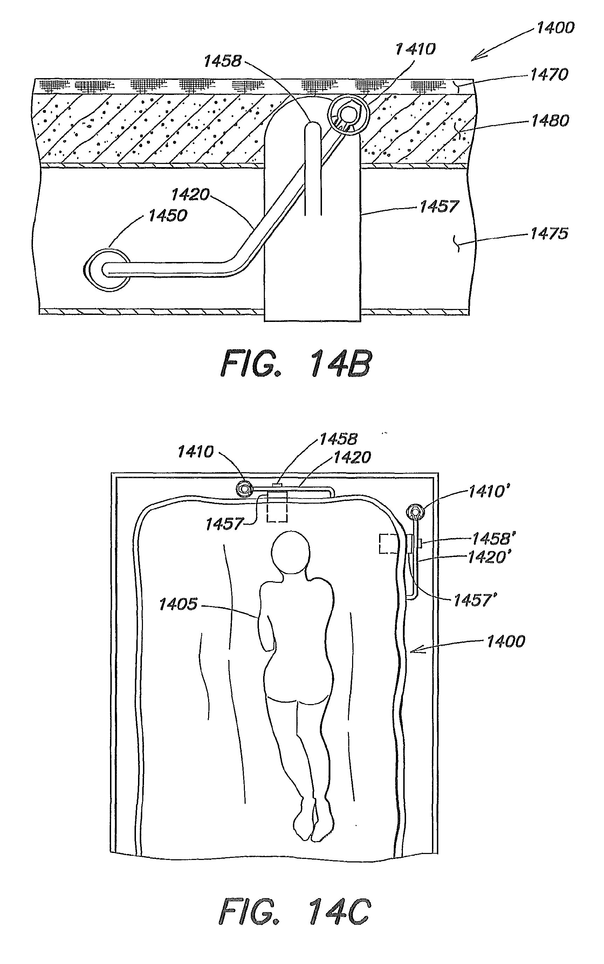

FIG. 14B illustrates an embodiment of an inflatable device 1400 that includes a valve 1410 (e.g., a self-sealing valve) fluidly coupled to the inflatable device 1400 through a conduit 1420. In one embodiment, the inflatable device 1400 includes a bladder 1475, a topper layer 1470, and a cushioning layer 1480 where an access point 1450 is located in a wall of the bladder 1475. As described above, the valve 1410 can be a two-way valve that allows the control of air into or out of the inflatable device 1400. In an alternate embodiment, the valve 1410 can be a one-way valve that only allows air to be released from the bladder 1475.

The embodiment shown in FIG. 14B includes a device 1457 (e.g., a hanger) which can assist in locating the valve 1410 so that it is easily accessible to a user of the inflatable device 1400, e.g., locate the valve within easy reach of the user. The device 1457 can be any structure that allows the valve 1410 and/or conduit 1420 to be secured (e.g., removably secured) at a location on or adjacent to the inflatable device 1400. In one embodiment, the device 1457 tethers the valve 1410 within reach of the user when the user is employing the inflatable device.

In one embodiment, the device 1457 includes an overall L shape formed by two sections that are substantially perpendicular to one another. In a version of this embodiment, a first section forms a lower flange that can be located beneath the inflatable device 1400. In this embodiment, a second section then extends perpendicular to the first section, for example, along a side of the inflatable device 1400 when the first section is located beneath the inflatable device 1400. In one embodiment, the hanger 1457 is adjustable and can be placed at a first location by a first user of the inflatable device 1400. A subsequent user may then relocate the hanger 1457 to a second location that they may prefer.

In the embodiment illustrated in FIG. 14B, the conduit is flexed upward when it is secured to the device 1457 so that the valve 1410 is located in the general vicinity of the topper layer 1470. As a result, the user of the inflatable device 1400 can easily reach the valve 1410 to adjust the inflation level of the inflatable device 1400. That is, the user is not forced to reach down to the surface (e.g., the bottom of the supporting frame or the floor) on which the inflatable device 1400 is being used to search for the valve when they would like to locate it to adjust the inflation level of the inflatable device 1400.

In the embodiment illustrated in FIG. 14B, the device 1457 includes an arm 1458 that assists in securing the conduit 1420 to the device 1457. In one embodiment, a section of the device 1457 and the arm 1458 define a slot that provides a friction fit for securing the conduit 1420 in place. For example, the conduit 1420 can be slid between the upwardly extending flange of the device 1457 and the arm 1458. As a result, the device 1457 can provide a range of elevations at which the conduit 1420 can be secured along with a corresponding range of elevations of the location of the valve 1410.

In various embodiments, the device 1457 need not include the arm 1458. Instead, in one or more alternate embodiments, other types of structure are used to provide a location at which the conduit or the valve 1410 itself can be secured. For example, the device 1457 may include a hook, a clasp or some type of fitting to which the conduit 1420 or the valve 1410 can be secured. In one or more alternate embodiments, structure is added to at least one of the conduit 1420 and the valve 1410 and the added structure assists in securing the conduit 1420 and the valve 1410, respectively, to the device 1457.

FIG. 14C illustrates the device 1457 employed with an inflatable device 1400 according to an embodiment of the invention. In the illustrated embodiment, a user 1405 lies on an inflatable device 1400 (e.g., a mattress). Two valves 1410, 1410' are fluidly coupled to the inflatable device 1400 by separate conduits 1420, 1420'. Each of the valves 1410, 1410' are located within reach of the user 1405 by securing the corresponding conduit 1420, 1420' to separate devices 1457, 1457', respectively. The multiple valves 1410, 1410' are illustrated to show that the device (e.g., 1457) can be used with conduit (e.g., 1420) that may be connected to the inflatable device 1400 at any of a variety of locations.

In general, a single conduit (e.g., 1420) and a single valve (e.g., 1410) are used with a single bladder, however, devices 1457 can be used with any number of conduits 1420 or valves 1410 regardless of the number of bladders in the inflatable device 1400. Also, where a multibladder inflatable device is used the devices 1457, 1457' can be used to locate the valves 1410, 1410' in separate locations that are each accessible to at least one of the users 1405. Further, where a single conduit 1420 and valve 1410 are employed, a first user may adjust the device 1457 position to locate the valve 1410 near their head, while a subsequent user may adjust the device 1457 position to locate the valve 1410 near their waist. In one embodiment, the conduit 1420 is of sufficient length that the valve 1410 may be located anywhere around the inflatable device 1400. It is envisioned that the hanger may be of any construction and be positioned at any location on the inflatable device or on any supporting structure (e.g., bed frame) that is suitable for use with the device.

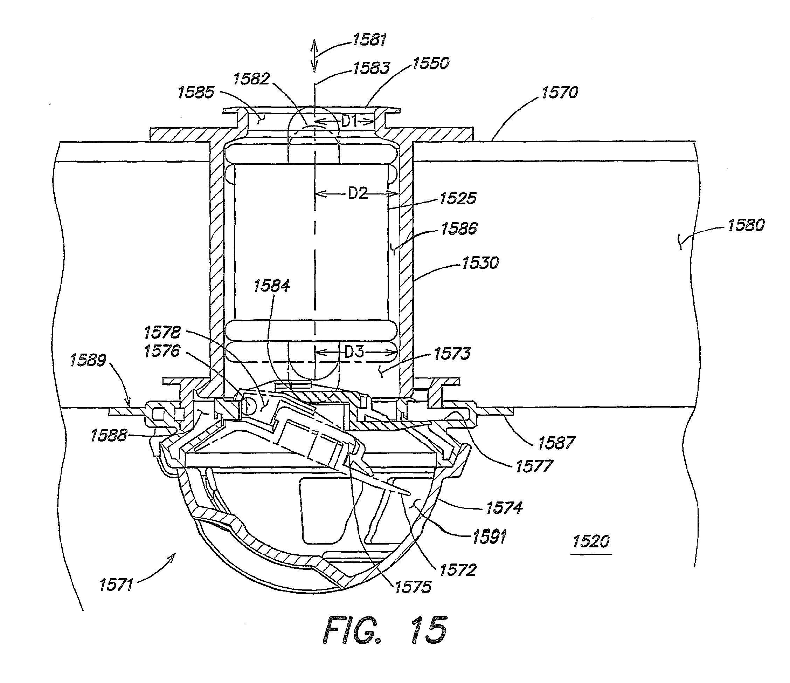

FIG. 15 illustrates another embodiment in which an air pump access point 1550 is provided substantially flush with a surface of a body support device (e.g., substantially flush with a surface of a mattress). The embodiment shown in FIG. 15 includes an activation device 1525 located in a fluid conduit 1530. The activation device 1525 is employed to open a self-sealing valve 1571 which, in one embodiment, is located beneath a top layer 1570 and a cushioning layer 1580. According to one embodiment, a cover is included to seal the access point 1550 when the access point 1550 is not in use.

The activation device 1525 includes a first end 1582 and a second end 1584. According to one embodiment with the activation device 1525 is located in the fluid conduit, the first end 1582 is located at an end of the fluid conduit 1530 that provides the access point 1550, and the second end 1584 is located at the end of the fluid conduit adjacent the self-sealing valve 1571. In one embodiment, the activation device 1525 travels substantially linearly within the fluid conduit 1530 in the directions indicated by the arrow 1581. In a version of this embodiment, the arrow 1581 represents an axis of travel coaxially located with a central axis 1583 of the fluid conduit 1530.

According to one embodiment, the fluid conduit 1530 includes a first region 1585 with a diameter D1 and a second region 1586 with a diameter D2. In one embodiment, the first region 1585 is located at the access point 1550 and the second region 1586 is located between the first region 1585 and the self-sealing valve 1571. In some embodiments, the fluid conduit includes a single region 1586, and the access point provides the a region 1585 with a diameter D1. That is, in some embodiments, the fluid conduit 1530 includes a single region 1586, and the access point provides a region 1585 with a diameter D1. In a version of this embodiment, the diameter D1 is less than the diameter D2. In a further version, the activation device 1525 has a maximum diameter D3 that is greater than the diameter D1 and less than the diameter D2. As a result, in one embodiment, the activation device 1525 is prevented from escaping the fluid conduit 1530 by the more narrow first region 1585 of the fluid conduit 1530.

In one embodiment, the self-sealing valve 1571 includes a body 1588, an air inlet 1573, a flexible diaphragm 1572, a housing 1574, and a flange 1587. The flexible diaphragm 1572 is attached to a hanger arm 1578 which is attached to the body 1588 at a hinge pin 1576. The air inlet 1573 is formed within the body 1588. The flange 1587 extends from the body 1588 and provides a surface 1589 that can be employed to secure the self-sealing valve 1571 to the inflatable bladder 1520. In one embodiment, the flange 1587 extends radially outward from the body 1588. In a version of this embodiment, the flange 1587 is located around substantially all of a circumference of the body 1588.

The housing 1574 extends from the body 1588 inward within the bladder 1520. In one embodiment, the housing 1574 forms a substantially domed shape that extends from the body 1588 inward within the bladder 1520. The housing 1574 defines one or more ports 1591 that provide passageways for air that is supplied to or released from the bladder 1520 via the air inlet 1573. The body 1588 also provides a valve seat 1577 that in one embodiment engages the flexible diaphragm 1572 when the self-sealing valve is closed.

In FIG. 15, the self-sealing valve 1571 is shown in a closed position. In addition, the valve 1571 is shown in the open position where the flexible diaphragm 1572 and the hanger arm 1576 appear in phantom. Similarly, the activation device 1525 is shown with the self-sealing valve 1571 closed, and the activation device 1525 is shown in phantom with the valve 1571 open.

In a first state, where no pressure is applied to the activation device 1525 the self-sealing valve 1571 is closed, i.e., the flexible diaphragm 1572 is in contact with the valve seat 1577. In one embodiment, a substantially air tight seal is formed by the flexible diaphragm 1572 and the valve seat 1577. When pressure is applied to the activation device 1525, for example, at the first end 1582, the activation device 1525 moves in the direction of the self-sealing valve 1571. The activation device 1525 continues to travel and the second end 1584 engages the hanger arm 1578. The hanger arm 1578 pivots about the hinge pin 1576 and the flexible diaphragm 1572 disengages from the valve seat 1577. Continued pressure further opens the self-sealing valve 1571. In one embodiment, a diameter less than the diameter D3 (e.g., the diameter D1) is included in at least one of the fluid conduit 1530 and the body 1588 in a region where the fluid conduit 1530 and the body 1588 meet. The reduced diameter (relative to the diameter D3) provides an interference that limits the travel of the activation device 1525 in the direction of the bladder 1520.

According to one embodiment, an inflation device (e.g., a portable air pump) includes a protrusion that engages the first end 1582 of the activation device 1525 when the inflation device engages the fluid conduit 1530 at the access point 1550.

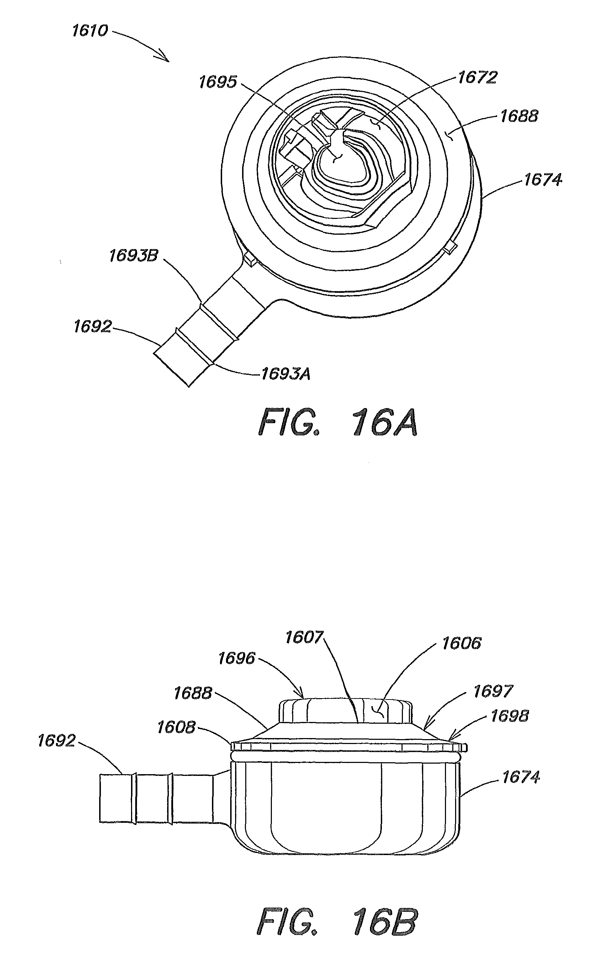

Referring now to FIG. 16A, one embodiment of a self-sealing valve assembly 1610 is shown. The valve assembly 1610 may be used with a conduit (e.g., the conduit 1420 of FIG. 14) to allow a user of an inflatable device to more easily adjust the inflation in the device while using the inflatable device, for example, to adjust the inflation in a mattress. According to one embodiment, the self-sealing valve assembly 1610 is used at a location (e.g., the location 1460) that is remote from an outlet (e.g., the outlet 1450) of the inflatable device. In one embodiment, the self-sealing valve assembly 1610 is a two-way valve while in an alternative embodiment, the valve assembly 1610 is a one-way valve.

The self-sealing valve assembly 1610 includes a body 1688, a housing 1674, and a flexible diaphragm 1672. The housing 1674 includes a hollow stem 1692 which can, in one embodiment, include one or more ridges 1693A, 1693B or barbs that allow the self-sealing valve assembly1610 to be secured to a conduit, for example, the conduit 1420. The self-sealing valve assembly 1610 includes a contact surface 1695 that provides a location to which pressure can be applied to open the valve.

According to one embodiment, an inflation device, for example, inflation device 710 may be engaged with an opening in the self-sealing valve assembly 1610. According to another embodiment, an inflation device, for example, inflation device 710 may be engaged with an opening in the self-sealing valve assembly 1610 via an interface device (e.g., interface device 730) to inflate the inflatable device to which the valve is connected. In a version of this embodiment, the inflation device (e.g., inflation device 710) in combination with an interface device (e.g., the interface device 730) can be attached to the self-sealing valve assembly 1610 via engaging one or more protrusions located on the interface device with corresponding structures of the self-sealing valve assembly 1610. In one embodiment, the corresponding structure of the self-sealing valve assembly 1610 includes one or more protrusions located on the body 1688. In another embodiment, one or more protrusions are located on the housing 1674. In alternative embodiments, inflation can be accomplished by pressing the inflation device 710 against the opening of the valve 1610. In a version of this embodiment, the interface device 730 is secured to the inflation device 710 and the assembled combination is pressed against the opening of the valve assembly 1610 to form a seal.

According to one embodiment, the air pressure provided by the inflation device 710 is sufficient to open the valve assembly 1610. In other embodiments, although the air pressure provided by the inflation device 710 may be sufficient to open the valve, the inflation device and/or an attached interface device include a protrusion (e.g., the protrusion 734) which extends into the opening of the valve 1610 when the inflation device or interface device is in contact with the self-sealing valve assembly 1610. The protrusion 734 engages the contact surface 1695 to bias open the self-sealing valve assembly 1610. Alternatively, air pressure for inflation may be provided manually by the user by mouth via a lipped coupling with the valve inlet.

FIG. 16B provides a side view of the self-sealing valve assembly 1610 shown in FIG. 16A. In one embodiment, the body 1688 is attached to the housing 1674 in which an opening is defined. The hollow stem 1692 may extend radially from the housing 1674. According to one embodiment, the body 1688 may include one or more regions including an upper region 1606, a middle region 1607, and a lower region 1608. Each region may, in one or more embodiments, provide a contact surface to which an inflation device and/or an interface device can be engaged to form a seal with the self-sealing valve assembly 1610. Alternatively the seal/engagement may be accomplished manually via a user who places their lips against the contact surface. For example, the upper region 1606 may provide a contact surface 1696 which defines an opening of the self-sealing valve assembly 1610. Further, the middle region 1607 can provide a contact surface 1697. A version of this embodiment, the contact surface 1697 tapers outward from the upper region 1607 to the lower region 1608. The lower region 1608 may provide a contact surface 1698 that may be used to seal an air path between an inflation device and the self-sealing valve assembly 1610. In some embodiments, two or more regions 1606, 1607, 1608 are used in combination to provide the contact surface.

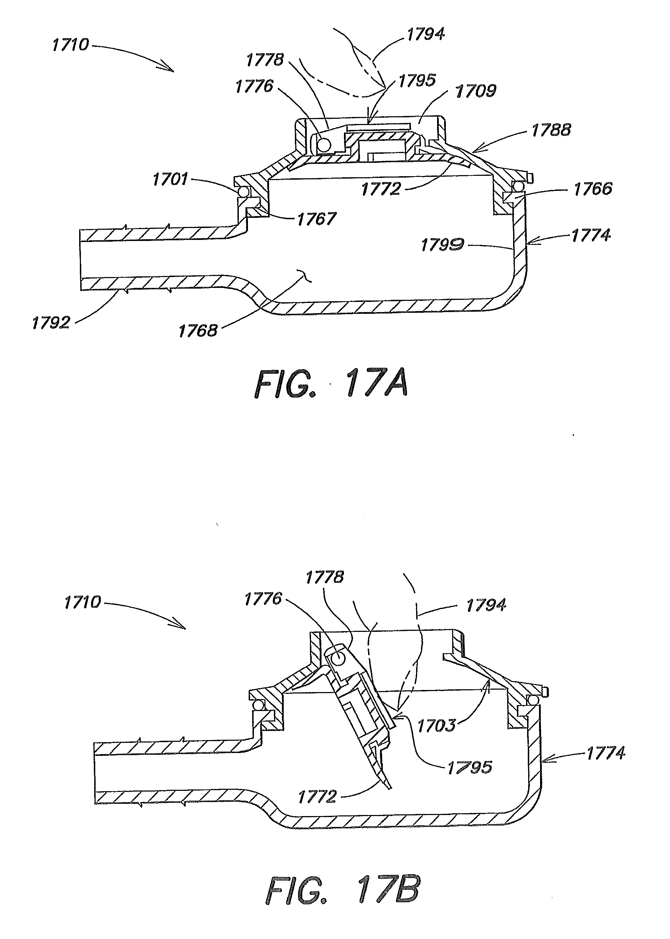

Referring now to FIG. 17A, a cross-section of an embodiment of the valve shown in FIG. 16B is illustrated in a closed position. The body of the valve is shown attached to the housing 1774. As shown in FIG. 17A, an inwardly projecting lip 1767 that extends from a wall 1799 of the housing is employed to help secure the body 1788 to the housing 1774. An outwardly projecting lip 1767 extends from the body 1788. When the self-sealing valve assembly 1710 is assembled, the lip 1767 is engaged with the lip 1766. In a version of this embodiment, a gasket 1701 is also provided to help seal the interface between the body 1788 and the housing 1774.

According to one embodiment, the valve assembly 1710 includes the diaphragm 1772 attached to a hanger arm 1778 via a hinge pin 1776. In operation, the valve opens when pressure is applied to contact surface 1795 and/or air pressure is applied to the air inlet from the exterior of the self-sealing valve assembly.

A user's finger 1794 is also shown in FIG. 17A to demonstrate the manual operation of the self-sealing valve assembly 1710 for deflation. Referring now to FIG. 17B, the valve assembly 1710 is shown in an open position. In manual operation, the pressure applied by the user at the contact surface 1795 pivots the hanger arm 1778 inward about the hinge 1776. As a result, the diaphragm 1772 is removed from engagement with the valve seat 1703. A deflation of the inflatable device may be accomplished by opening the self-sealing valve assembly 1710 in the manner shown in FIG. 17B.

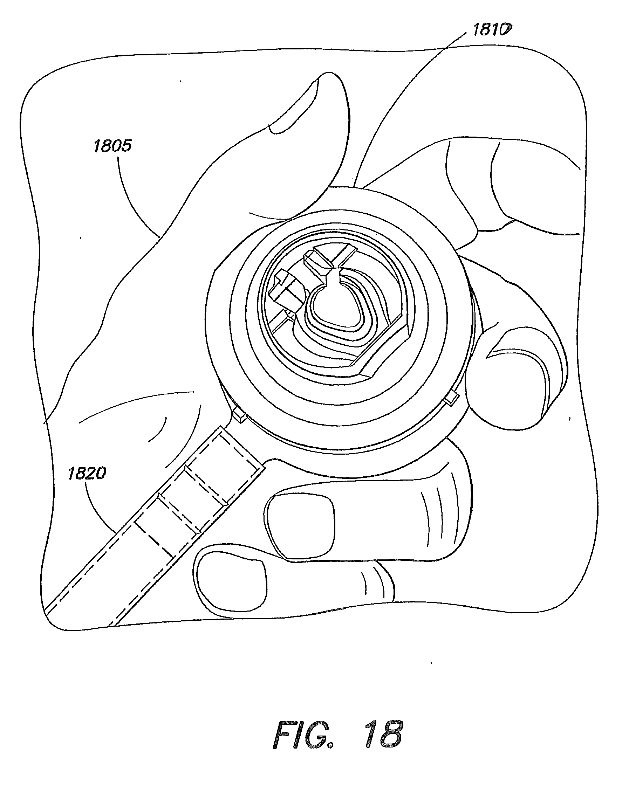

FIG. 18 illustrates the self-sealing valve assembly 1810 located in a hand 1805 of the user. The valve assembly 1810 depicted in FIG. 18 is attached to a clear tube 1820 that in one embodiment extends from the valve assembly 1810 to an access point in the mattress. It can be seen in FIG. 18 how the valve assembly 1810 can easily be operated with a single hand to adjust the inflation of the bladder 1425 which in one or more embodiments is a body support comfort device such as a mattress or a pillow. It can also be seen how accessible the valve assembly is for manual inflation by mouth.

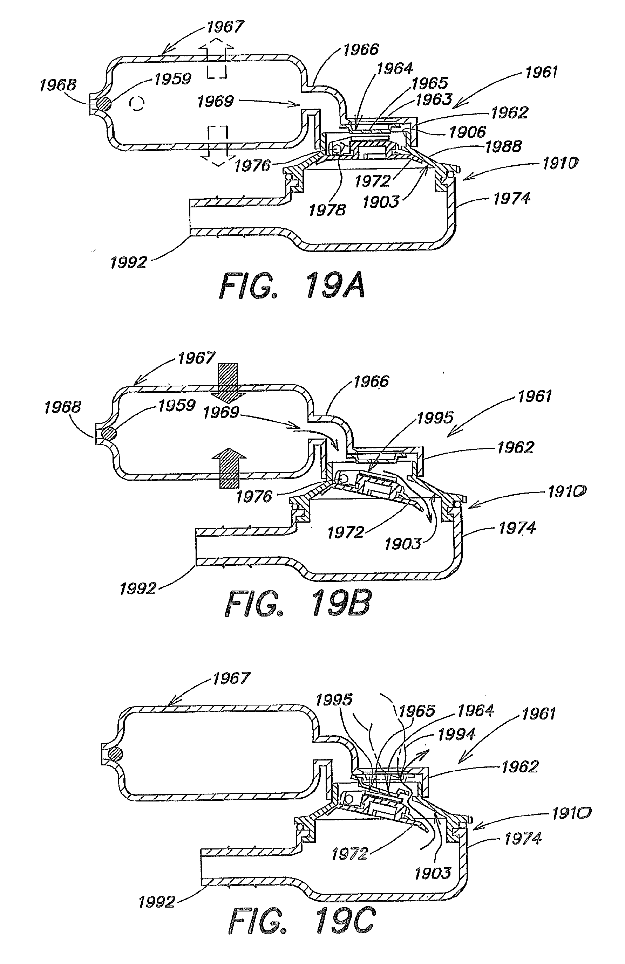

Referring now to FIGS. 19A-19C, an embodiment of a manual inflation device 1961 is illustrated. According to one embodiment, the manual inflation device 1961 connects to a self-sealing valve assembly 1910 and provides a user of an inflatable device with a mechanical advantage in situations where an electric pumping source is not practical or available and where manual inflation by mouth or other manual means is not practical, such as, for example, inflating a seat cushion while sitting on the cushion.

Referring to FIG. 19A, the self-sealing valve assembly 1910 includes a housing 1974, a body 1988, a hanger arm 1978, a hinge pin 1976 and a contact surface 1964. According to one embodiment, the self-sealing valve assembly is constructed as described with reference to the self-sealing valve assembly illustrated in FIGS. 16A-16B.

In one embodiment, the manual inflation device 1961 includes a chamber 1967, a neck 1966, a fitting 1962, and an operating element 1965. The chamber 1967 includes an inlet 1968 and an outlet 1969. The chamber 1967 may also include a check valve 1959. In a version of this embodiment, the neck 1966 is located at the outlet 1969, and the neck 1966 connects the chamber 1967 to the fitting 1962. The chamber 1967 may be manufactured from a resilient material to allow it to return to its original shape after being compressed by the user. That is, in one embodiment, the chamber 1967 can be operated in a manner similar to a bulb used with blood pressure sensing apparatus. Alternatively, the chamber may cooperate with a housing that combines with the chamber such that when the housing is manipulated by the user the chamber expands and contracts to provide the pumping action.

In one embodiment, the fitting 1962 is adapted to engage a valve or valve assembly. In the embodiment shown in FIG. 19A, the fitting 1962 is adapted to engage an upper region 1906 of the self-sealing valve assembly 1910. According to one embodiment, a substantially air-tight seal is formed when the fitting 1962 is engaged with the self-sealing valve assembly 1910. Thus, air can be forced from the outlet 1969 of the chamber 1967 into an inflatable device via the self-sealing valve assembly 1910.

According to one embodiment, the manual inflation device 1961 can be used with valves located remotely from the inflatable device. According to another embodiment, the manual inflation device 1961 can be used with a valve located at an outer surface of an inflatable device, for example, the manual inflation device 1961 can be employed with the valve 1210 of FIG. 12E. In addition, in one embodiment, the manual inflation device is employed with a valve 1210, a fluid conduit 1230, and an activation device 1225 as illustrated in FIG. 12D, that is, where the valve is located beneath one or more of a topper layer 1270 and a cushion layer 1280 of the inflatable device.

The fitting 1962 includes an opening 1963 in which the operating element 1965 is located. In one embodiment, the fitting 1962 includes a substantially circular outer diameter and the operating element 1965 is centrally located within the fitting 1962, that is, centrally located relative to the outer diameter of the fitting 1962. According to one embodiment, an end of the operating element 1965 attached to the neck 1966 operates as a hinge. In one embodiment, the operating element forms a substantially leak free seal with the fitting 1962. The operating element 1965 includes a contact surface 1964 by which it can be depressed to engage the hanger arm 1978 and move the diaphragm 1972 from the valve seat 1903. According to one embodiment, the operating element 1965 is manufactured entirely from resilient material. In a version of this embodiment, the operating element 1965 is manufactured from the same material as the diaphragm 1972. In one embodiment, the operating element 1965 is a paddle which may be comprised of both rigid and resilient material.

FIG. 19B illustrates the air flow when the manual inflation device 1961 is operated to inflate an inflatable device. The general path of the air flow from the chamber 1967 is indicated by the arrows. In operation, the chamber 1967 of the manual inflation device 1961 is compressed, as indicated by the opposing arrows in the chamber 1967, to expel air from within the chamber 1967 into the self-sealing valve assembly 1910. In one embodiment, the check valve 1959 located at the inlet 1968 prevents air from being expelled out the inlet when the chamber is squeezed. The check valve then opens to allow air into the chamber 1967 when the chamber is in a relaxed (i.e., uncompressed) state. The chamber 1967 may be, for example, compressed when a user squeezes it in their hand or compresses it with their foot.

According to one embodiment, air is expelled from the chamber 1967 with sufficient pressure to force the hanger arm 1978 and the diaphragm 1972 into the housing 1974. As a result, the diaphragm 1972 moves off of the valve seat 1903 and the air expelled from the chamber 1967 travels into the self-sealing valve assembly 1910 through the hollow tube 1992 and into an inflatable device that may be attached to the valve assembly 1910 via a conduit.

As shown in phantom in FIG. 19A, the chamber 1967 is re-inflating with air after previously being compressed. During re-inflation, the walls of the chamber 1967 expand outward (in the direction of the arrows shown in phantom) and return to their "at rest" position. In the embodiment illustrated in FIG. 19A, the check valve 1959 opens and air is drawn into the chamber 1967 through the inlet 1968 during re-inflation of the chamber 1967.

The manual inflation device 1961 can also be used for adjusting the inflation of an inflatable device by allowing a user to release air from the inflatable device via the self-sealing valve assembly 1910. FIG. 19C illustrates a finger 1994 of a user engaging the contact surface 1964 of the operating element 1965 to manually open the self-sealing valve assembly 1910. The operating element 1965 is shown in phantom in a position where it is fully engaged with the fitting 1962. The user depresses the operating element 1965 to engage the operating element 1965 with the contact surface 1995 of the self-sealing valve assembly 1910. Continued pressure rotates the hanger arm 1978 into the housing 1974 and forces the diaphragm 1972 away from the valve seat 1903. As a result, air can flow from an inflatable device and into the self-sealing valve assembly 1910 via the hollow tube 1992. The air can escape the self-sealing valve assembly as shown by the arrow which indicates the air flow from the self-sealing valve assembly through the opening 1963 in the fitting 1962. According to one embodiment, the check valve 1959 remains closed when air is being released from the inflatable device.

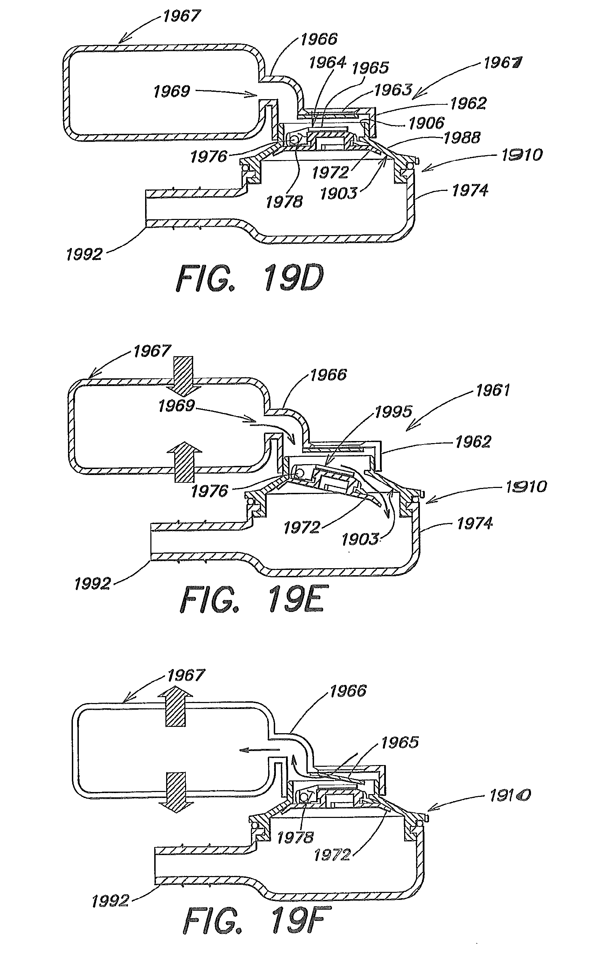

FIGS. 19D-19F illustrate an alternative embodiment of a manual inflation device 1961. In embodiments of the manual inflation device 1961 illustrated in FIGS. 19D-19F, the chamber 1967 does not include an inlet 1968 or the check valve 1959. Instead, as described in greater detail below, air is expelled from a port 1969 when the chamber is compressed and air is drawn back into the chamber through the fitting 1961 and the port 1969 when the chamber 1967 expands and re-inflates. Referring to FIG. 19D, the self-sealing valve assembly 1910 includes a housing 1974, a body 1988, a hanger arm 1978, a hinge pin 1976 and a contact surface 1964.

The manual inflation device 1967 of FIGS. 19D-19F can be used with a variety of valves including a valve mounted at the surface of an inflatable device (e.g., the valve 1210 illustrated in FIG. 12E), a valve mounted at one end of a conduit (e.g., the valve 1210 illustrated in FIG. 12D or the self-sealing valve assembly 1571 illustrated in FIG. 15), or a valve located at an end of a flexible conduit (e.g., a self-sealing valve assembly as illustrated in FIGS. 14A-14C and 16A-16B). According to one embodiment, the self-sealing valve assembly is constructed as described with reference to the self-sealing valve assembly 1610 illustrated in FIGS. 16A-16B.

In one embodiment, the manual inflation device 1961 includes the chamber 1967, a neck 1966, a fitting 1962, an operating element 1965 and the port 1969. In a version of this embodiment, the neck 1966 is located at the port 1969, and the neck 1966 fluidly couples the chamber 1967 to the fitting 1962. The chamber 1967 may be manufactured from a resilient material to allow it to return to its original shape after being compressed by the user. That is, in one embodiment, the chamber 1967 can be operated in a manner similar to a bulb used with blood pressure sensing apparatus.

In one embodiment, the fitting 1962 is adapted to engage an upper region 1906 of the self-sealing valve assembly 1910. According to one embodiment, a substantially air-tight seal is formed when the fitting 1962 is engaged with the self-sealing valve assembly 1910. Thus, air can be forced from the port 1969 of the chamber 1967 into an inflatable device via a self-sealing valve assembly 1910.

The fitting 1962 includes an opening 1963 in which the operating element 1965 is located. In one embodiment, the fitting 1962 includes a substantially circular outer diameter and the operating element 1965 is centrally located within the fitting 1962, that is, centrally located relative to the outer diameter of the fitting 1962. According to one embodiment, an end of the operating element 1965 attached to the neck 1966 operates as a hinge. In one embodiment, the operating element forms a substantially leak free seal with the fitting 1962. The operating element 1965 includes a contact surface 1964 by which it can be depressed to engage the hanger arm 1978 and move the diaphragm 1972 from the valve seat 1903. According to one embodiment, the operating element 1965 is manufactured entirely from resilient material. In a version of this embodiment, the operating element 1965 is manufactured from the same material as the diaphragm 1972. In one embodiment, the operating element 1965 is a paddle.

FIG. 19E illustrates the air flow when the manual inflation device 1961 is operated to inflate an inflatable device. The general path of the air flow is indicated by the arrows that appear within the port 1969 and self-sealing valve assembly 1910. In operation, the chamber 1967 of the manual inflation device 1961 is compressed (e.g., as indicated by the opposing arrows) to expel air from within the chamber 1967 into the self-sealing valve assembly 1910. The chamber 1967 may be, for example, compressed when a user squeezes it in their hand or compresses it with their foot.

According to one embodiment, air is expelled from the chamber 1967 with sufficient pressure to force the hanger arm 1978 and the diaphragm 1972 into the housing 1974. As a result, the diaphragm 1972 moves off of the valve seat 1903 and the air expelled from the chamber 1967 travels into the self-sealing valve assembly 1910 through the hollow tube 19 92 and into an inflatable device that may be attached to the valve assembly 1910 via a conduit.

After air is forced from the chamber, the chamber re-inflates as illustrated in FIG. 19F. In one embodiment, when the chamber 1967 re-inflates the chamber walls expand outward (as indicated by the shaded arrows) and air is drawn into the chamber through the opening 196 3 which is drawn downward into the fitting (thereby, breaking the seal that may have existed between the operating element 1965 and the fitting) by the vacuum that is initially created when the chamber 1967 begins to reinflate. The air drawn into the fitting travels into the chamber 1967 via the neck 1966 and the port 1969.

In addition, the manual inflation device 1961 illustrated in FIG. 19F can also be used for adjusting the inflation of an inflatable device by allowing a user to release air from the inflatable device via the self-sealing valve assembly 1910 in the manner shown in FIG. 19C and described above.

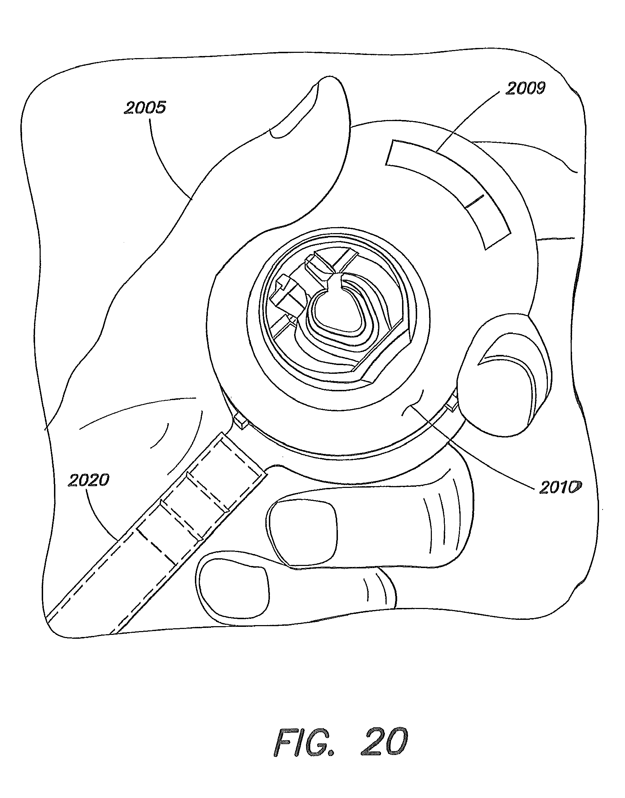

FIG. 20 illustrates a self-sealing valve assembly 2010 including a pressure indicator 2009 (e.g., a pressure gauge) that provides a user 2005 with an indication of the inflation level of an inflatable device. In one embodiment, the pressure indicator 2009 is an analog pressure indicator while in another embodiment the pressure indicator 2009 is a digital pressure indicator.

As shown in FIG. 20, the self-sealing valve assembly 2010 is attached to a flexible conduit 2020 that can extend from the valve assembly 2010 to an access point in an inflatable device; thereby, connecting the self-sealing valve 2010 assembly to the inflatable device. In one or more embodiments, the pressure indicator 2009 is included in a self-sealing valve assembly 2010 that is located remotely from the inflatable device. The pressure indicator 2009 allows a user of an inflatable device to easily determine the inflation level of the inflatable device, and as a result, to easily adjusted the inflation level to achieve an optimum inflation level. For example, where the self-sealing valve assembly is a two-way valve assembly the user 2005 can add air to the inflatable device when the inflation level is less than desired (e.g., as indicated by the pressure indicator 2009). In addition, with either a one-way valve assembly or a two-way valve assembly the user 2005 can release air from the inflatable device when the inflation level is greater than desired (e.g., as indicated by the pressure indicator 2009).

In other embodiments, the pressure indicator 2009 is included in a self-sealing valve assembly 2010 that is attached to an inflatable device. For example, the self-sealing valve assembly 2010 including the pressure indicator 2009 can be located at an access point to an inflatable device

The term "automatic closure apparatus" is defined herein to mean an apparatus that closes without requiring human activation to achieve closure. An automatic closure apparatus may include structure that biases the apparatus closed such as a conventional spring or suitable shaped molded plastic structure that tends to flex in manner to achieve closure. Alternatively, an automatic closure structure may be configured and arranged such that air pressure within an inflatable device, with which the automatic closure structure is used, operates on the automatic closure apparatus to achieve closure.

In some embodiments, any of the valves (e.g., the valve 1410, the self-sealing-valve 1571, and the self-sealing valve 1671) described herein may include a one-way valve (e.g., a self-sealing valve assembly as described in U.S. Patent No. 6,237,621, which was incorporated by reference above). Alternatively, any of the valves (e.g., the valve 1410, the self-sealing valve 1571, and the self-sealing valve 1671) may include in a two-way valve through which inflation and deflation are accomplished. It is to be appreciated that a valve having an automatic closure apparatus may provide a complete seal, such that by itself it provides a seal that is able maintain air in the inflatable device for a substantial period of time. Alternatively, the automatic closure device may provide a partial seal, such that the automatic closure device may serve to slow the rate at which air exits the bladder, and a cover 1416 may be placed over the valve 1415 to provide a more complete seal to maintain air in the bladder. The cover may be snapped or otherwise secured over the valve using any suitable structure known in the art. It is to be appreciated that in embodiments where the valve provides a complete seal and in embodiments that provide a partial seal, automatic closure device reduces the amount of air that escapes from the inflatable device prior to sealing to prevent the escape of air. Such a feature may be particularly advantageous in embodiments such as mattresses where the user's body weight may cause rapid exiting of air from the mattress, thereby reducing control of the amount of air in the mattress (i.e., firmness control is reduced by air loss).

In some embodiments, the valve having an automatic closure apparatus is configured such that a user can operate it using a single hand. Such embodiments of the invention are to be contrasted with prior art apparatus where, among other differences with aspects of the present invention, a valve is provided that requires two hands to be efficiently operated (e.g., a threaded valve that must be rotated to be opened or closed). In such apparatus, operation of the valve may be inconvenient (e.g., the user may have to move his body to operate the valve) and may result in too much air exiting the inflatable device prior to sealing, thereby reducing firmness control. In embodiments of the invention including a cover over the valve, the cover may also be configured to be operated by a user using a single hand.

In some embodiments, valve 1410, or additional structure fluidly coupled to the valve, is sized and shaped such that air can be blown into the mattress through the valve and/or additional structure by a user using his mouth. In some embodiments of the invention including such a structure, the valve may include an automatically closing structure as described above (e.g., the valve may be a self-sealing valve assembly as described in U.S. Patent No. 6,237,621). It is to be appreciated that, for an inflatable device having a valve that is so sized and shaped and including an automatic closing structure, the firmness of the inflatable device can be easily controlled. For example, in embodiments where the inflatable device is a mattress, a person lying on the mattress can grab conduit 1420 and/or valve 1415, and blow air into the mattress so as to achieve a selected firmness. In such a device, automatic closure structure 1415 can be configured to be a self-sealing valve, such as the self-sealing valve described above, so as to automatically close when the person ceases blowing air. Accordingly, the firmness of the mattress achieved by blowing air would thereby be maintained.

In some embodiments, it is desirable that the valve be inexpensive to manufacture and not include any electrical components. For example, the valve may be a simple mechanical valve (e.g., the valve may be a self-sealing valve assembly as described in U.S. Patent No. 6,237,621). In other embodiments, one or more electromechanical components may be included that permit a user to control air escaping the inflatable device. For example, in such embodiments an activation device (e.g., a button or switch) capable of activating the valve is accessible to the user. Upon activation of the activation device by the person, air may be permitted to flow through the conduit and the valve to exit the bladder. In mattress embodiments, the conduit and valve can be configured such that the activation device is accessible to a person lying on the mattress).

In various embodiments described herein, a portable inflation device is a device that can be moved by a user to an inflatable device (e.g., carried). A portable inflation device may be battery operated. In addition, a portable inflation device may operate on AC power and include an attached cord that can be plugged into a source of AC power (e.g., an outlet).

Embodiments of all the valves described herein may be used for manual inflation by mouth. In addition, an inflatable device may include a valve with a mouthpiece located at the end of a flexible conduit to allow a user to more easily inflate the device by mouth. In one embodiment, the mouthpiece may rotate between an open position for inflation and a closed position for sealing the air in the inflatable device.

Having thus described several aspects of at least one embodiment of this invention, it is to be appreciated various alterations, modifications, and improvements will readily occur to those skilled in the art. Such alterations, modifications, and improvements are intended to be part of this disclosure, and are intended to be within the spirit and scope of the invention. Accordingly, the foregoing description and drawings are by way of example only.

## Claims

1. A cover arrangement sized and shaped for use with an inflatable device, the cover arrangement having a first region comprising a material having a first resistance to air flow and a second region having a second resistance to air flow.

2. The cover arrangement of claim 1, wherein the resistance to air flow of the second region is less than the resistance to air flow of the first region, and the cover arrangement is configured such that the second region aligns with an air passageway of the inflatable device when the cover arrangement is disposed on the inflatable device.

3. The cover arrangement of claim 1, wherein the thread count of the second region is less than the thread count of the first region.

4. An inflatable device comprising an inflatable bladder, at least one covering layer and a conduit sized and arranged to define a passageway from the inflatable bladder through the at least one covering layer to an outer surface of the inflatable device.

5. The inflatable device of claim 4, further comprising a valve fluidly coupled to the inflatable bladder and the conduit, the conduit extending from the valve to the outer surface of the inflatable device.

6. The inflatable device of claim 5, wherein the valve is accessible to a user through the conduit.

7. The inflatable device of claim 4, further comprising a valve disposed substantially flush with the outer surface of the inflatable device, the conduit extending from the inflatable bladder to the valve.

8. The inflatable device of claim 4, wherein the inflatable device is a mattress.

9. A covering arrangement for a device having an inflatable bladder and a valve that is fluidly coupled to the inflatable bladder, the covering arrangement having an access hole, the covering arrangement being configured such that the access hole is aligned with the valve when the covering arrangement is disposed on the device.

10. The covering arrangement of claim 9, wherein the device is a mattress.

11. An inflatable device comprising:
an inflatable bladder having a port through which air enters and exits the bladder;
a flexible conduit coupled to the port; and
a two-way valve remotely located from the port, the valve being fluidly coupled to the port though the conduit and comprising an automatic closure apparatus adapted to allow controlled release of air from the bladder.

12. The inflatable device of claim 11, wherein the inflatable device comprises a mattress, and wherein the mattress includes at least one of a topper and a cushioning layer.

13. The inflatable device of claim 12, wherein the conduit is configured to extend through the at least one of the topper and the cushioning layer.

14. The inflatable device of claim 12, wherein the valve and flexible conduit are configured such that they can be moved to a location remote from the at least one of the topper and the cushioning layer.

15. The inflatable device of claim 11, wherein the valve includes a pressure indicator.
